(19) Europäisches Patentamt
European Patent Office
Office européen des brevets

(11) **EP 2 907 686 B1**

(12) **EUROPEAN PATENT SPECIFICATION**

(45) Date of publication and mention of the grant of the patent:
**10.11.2021 Bulletin 2021/45**

(21) Application number: **13844701.6**

(22) Date of filing: **25.09.2013**

(51) Int Cl.:
*B60L 7/14* (2006.01)   *B60L 3/00* (2019.01)
*H01M 10/44* (2006.01)   *H01M 10/48* (2006.01)
*H02J 7/00* (2006.01)   *H02J 7/02* (2016.01)

(86) International application number:
**PCT/JP2013/075787**

(87) International publication number:
**WO 2014/057802 (17.04.2014 Gazette 2014/16)**

(54) **REGENERATION CONTROL DEVICE FOR VEHICLE**

REGENERATIONSSTEUERUNGSVORRICHTUNG FÜR EIN FAHRZEUG

DISPOSITIF DE COMMANDE DE RÉCUPÉRATION POUR VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.10.2012 JP 2012225575**

(43) Date of publication of application:
**19.08.2015 Bulletin 2015/34**

(73) Proprietor: **Hitachi Astemo, Ltd.**
**Hitachinaka-shi, Ibaraki 312-8503 (JP)**

(72) Inventors:
• **OKADA Takashi**
**Tokyo 100-8280 (JP)**
• **MIYAZAKI Hideki**
**Hitachinaka-shi**
**Ibaraki 312-8503 (JP)**
• **OYAMA Kazuto**
**Hitachinaka-shi**
**Ibaraki 312-8503 (JP)**
• **KOJIMA Takao**
**Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
EP-A1- 2 019 468   WO-A1-2012/053592
JP-A- H09 312 901   JP-A- 2004 180 394
JP-A- 2006 050 846   JP-A- 2010 200 557
JP-A- 2010 226 792   JP-A- 2010 226 792
JP-A- 2012 201 160

**Description**

Technical Field

The present invention relates to a regeneration control device for preventing degradation of a cell battery that may occur due to overvoltage during regeneration, which is used in a vehicle capable of performing braking using energy regenerated in a motor, such as an electric vehicle or a hybrid electric vehicle.

Background Art

Conventionally, a technique has been known in which a motor that is a rotary electric motor is installed as a power source of an electric vehicle or a hybrid electric vehicle, for example, an inverter that is a motor drive unit is provided between the motor and an electric power supply unit, and a motor control unit which controls torque and the like of the motor is provided so that the inverter supplies a motor current that is a motor drive signal to drive the motor. The inverter converts direct current (DC) power from the electric power supply unit into alternate current (AC) power that is determined in accordance with a torque reference, and the motor is driven with the AC current. The motor control unit transmits a control signal to the inverter to control the inverter and generate an AC current for driving the motor.

The motor drive unit (inverter) which drives a motor as described above is driven by using an electric power supply unit as its energy source. For the electric power supply unit, a battery system in which a plurality of cell batteries constituted by a secondary battery and the like connected in series, for example, is used.

A battery system like this is installed on a vehicle as an electric power supply, and the battery system supplies electric power to drive the motor. The battery system is configured so that while the vehicle is decelerated or the like, regenerated energy generated by a regeneration operation of the motor is stored in the battery system and electric energy is exchanged between the battery system and the motor.

When the battery system performs power supply and regeneration of power, power that can be supplied and power that can be regenerated are limited in accordance with a state of the cell battery included in the battery system. For example, if the state of charge (SOC) of the cell battery is in the state of full charge, the battery system cannot receive the power regenerated by the motor. In addition, if the charged capacity of the cell batteries is small, power cannot be supplied to the motor. Cell batteries constituting the battery system may be affected by degradation of their performance, which may occur depending on their usage. For example, if the voltage across terminals of a cell battery reaches a predetermined charge/regeneration inhibiting voltage or above to cause overvoltage or is decreased to a predetermined voltage or below, degradation of the performance of the cell battery may occur. Because of this problem, battery systems are used with restrictions so that the voltage across terminals of the cell batteries would not exceed the predetermined voltage.

As an example of the above-described conventional technique, Patent Literature 1 discusses a technique in which when a battery system including serially connected cell batteries is used for regeneration, it is determined whether the voltage across terminals of the cell batteries constituting the battery system has exceeded a predetermined regeneration limiting voltage equal to or lower than a charge/regeneration inhibiting voltage, and if it is determined that the regeneration limiting voltage has been exceeded, then a total voltage to be achieved at a timing when the voltage across terminals of any of the cell batteries reaches the predetermined charge/regeneration inhibiting voltage (i.e., a sum of the voltages across terminals of the cell batteries constituting the battery system) is predicted, and the amount of regeneration is limited in accordance with deviation of an actual total voltage from the predicted total voltage.

Citation List

Patent Literature

Patent Literature 1: JP Patent Publication (Kokai) No. 2004-173424 A

In JP 2010 226792 A, a battery pack control apparatus including multiple first voltage detection means, which are connected to electrical cells are described. The electrical cells are constituting the battery pack. Control means are provided that select either the voltage of an electric cell or the total voltage of the battery pack and controls the power of the battery pack according to the selected voltage.

In JP 2010 200557 A, the state of a battery is detected continuously by a battery residual-capacity data acquiring part. The battery residual-capacity data is gained while the previously gained battery residual-capacity data is corrected at every data update timing satisfying a specified condition.

In WO 2012 053592 A, a regeneration control device is described. A brake fluid pressure is detected by a detection means, detecting the amount of engagement of the brakes of a hybrid automobile. A first regeneration control executed in the state of the accelerator of the hybrid automobile being in a closed state and the brake pedal not being depressed, a second regeneration control executed in the state of the accelerator of the hybrid automobile being in a closed state and the brake pedal being depressed, and a third regeneration control executed when the accelerator pedal of the hybrid automobile is in the closed state, are described.

In EP 2019468 A1, a storage battery charging/discharging controller is described. A maximum dischargeable current is obtained. When the discharge electric power limitation for the battery is temporarily relaxed in accordance with a discharge request made by a load, a discharge electric power permissible value is set to correspond to the maximum dischargeable electric power, such that the output voltage of the power storage device does not fall outside the controlled voltage range from the lower limit voltage to an upper limit voltage.

Summary of Invention

Technical Problem

In the above-described Patent Literature 1, if the voltage across terminals of any of the plurality of cell batteries constituting the battery system has exceeded the predetermined regeneration limiting voltage, a total voltage to be achieved at a timing when the voltage across terminals of the cell batteries reaches a regeneration inhibiting voltage for inhibiting regeneration is predicted, and regeneration is limited in accordance with deviation of an actual total voltage from the predicted total voltage value. In other words, the voltage across terminals of the cell batteries included in the battery system is detected and if the detected voltage across terminals has exceeded a predetermined regeneration limiting voltage, a total voltage at which the regeneration inhibiting voltage will be reached is predicted, and in detecting the voltages across terminals of multiple cell batteries, time delay for the detection may occur.

For example, if the battery system is constituted by lithium-ion battery cells, the opening voltage across terminals of the cell batteries is about 3.7 V, and to achieve a voltage of about 360 V for the voltage to be supplied to the motor and the inverter, ninety-six cell batteries are to be connected in series, for example. Because parameters for the multiple cell batteries constituting the battery system that represent the characteristics of the cell batteries such as the open circuit voltage (OCV) and internal resistance are uneven, the voltages across terminals of the cell batteries individually vary according to operation conditions (the current and the temperature). It is necessary to detect the voltages across terminals of the multiple cell batteries described above individually to suppress degradation of each of the cell batteries, and it therefore takes time to detect the voltages across terminals of all the cell batteries. Note that because it will require high costs to structure hardware for detecting the multiple voltages at the same time, the detection of voltages of multiple cell batteries is generally implemented by a method in which the voltages are serially detected.

In general, when regeneration is performed by a motor of a vehicle, the state of vehicle speed shifts from a high vehicle speed state to a low vehicle speed state and the regenerated energy is higher in a period in which the vehicle speed is high (i.e., a period in which the motor speed is high) than in a period in which the vehicle speed is low (i.e., a period in which the motor speed is low), and the amount of regeneration is therefore larger in the beginning of the regeneration. Namely, when regeneration is performed in a general way, the amount of regeneration is large in an initial stage of the regeneration, and it is therefore likely that overvoltage may occur, in which the voltage reaches the charge/regeneration inhibiting voltage.

Accordingly, in the technique discussed in Patent Literature 1 in which the total voltage that is the regeneration inhibiting voltage is predicted after a predetermined regeneration limiting voltage is reached, if any delay has occurred in detecting the voltages across terminals of the cell batteries due to the large amount of regeneration from the initial period of the regeneration, it is possible that the regeneration inhibiting voltage is reached before the total voltage that is the regeneration inhibiting voltage is predicted, and therefore inhibition of regeneration may be abruptly started when the regeneration inhibiting voltage is reached.

In other words, in vehicles, it is possible that a large amount of regeneration is generated from the initial period of regeneration, and if any delay has occurred in the detection of voltages across terminals of the cell batteries, it is therefore difficult in the method discussed in Patent Literature 1 to perform limit of regeneration power before the regeneration inhibiting voltage is reached.

In consideration of the above-described problems arising in the conventional technique, the present invention performs limit of regeneration power so that the regeneration inhibiting voltage would not be reached even if any delay has occurred in the detection of the voltages across terminals of cell batteries. In other words, a purpose of the present invention is to provide a battery system including plurality of cell batteries capable of quickly starting limit of regeneration power before voltages across terminals of the cell batteries reach a regeneration inhibiting voltage in order to suppress degradation of the cell batteries even if any delay has occurred in the detection of states such as the voltages across terminals of the plurality of cell batteries and also capable of increasing the amount of regeneration up to an upper limit amount close to the regeneration inhibiting voltage.

Solution to Problem

To solve the above indicated problems, the features of the independent claim are suggested. Dependent claims concern further preferred developments. A regeneration control device for a vehicle includes a motor capable of generating a vehicle braking force by regeneration, a battery system including a plurality of chargeable/dischargeable cell batteries, a battery monitoring device configured to detect a state of the battery system and states of the cell batteries, and regeneration limiting means configured to limit an amount of regeneration by the motor performed when a vehicle braking request is received within a predetermined regeneration power limiting amount, and in the regeneration control device, a period of a first limit of regeneration power starting when the vehicle braking request is received is provided, in which limit of regeneration power is performed by using a constant value or a regeneration power limiting amount set according to a last state of the battery system, and a period of a second limit of regeneration power in which limit of regeneration power is performed after the period of the first limit of regeneration power is provided, in which the regeneration power limiting amount is determined according to the states of the cell batteries acquired from the battery monitoring device during the regeneration performed in the period of the first limit of regeneration power.

The regeneration power limiting amount for the period of the first limit of regeneration power is set so that a total voltage of the battery system becomes lower than a predetermined total voltage limiting value, for example, and a relatively small amount of regeneration is set as the regeneration power limiting amount with a sufficient margin so as to securely protect the cell batteries. Accordingly, the cell batteries are securely prevented from reaching a regeneration inhibiting voltage even in an initial period of braking in which the vehicle speed is high.

Meanwhile, the regeneration power limiting amount for the period of the second limit of regeneration power is determined according to the states of the cell batteries that have been actually acquired during the regeneration in the period of the first limit of regeneration power, and a relatively large amount of regeneration that is close to the limit can therefore be set as the regeneration power limiting amount.

In one preferable embodiment, a cell battery that is likely to reach the regeneration inhibiting voltage during regeneration is identified according to the states of the cell batteries during the period of the first limit of regeneration power and the regeneration power limiting amount for the period of the second limit of regeneration power is determined so that the identified cell battery may not reach the regeneration inhibiting voltage. Accordingly, even if the multiple cell batteries have various different characteristics, no cell battery would reach the regeneration inhibiting voltage.

The states of the cell batteries acquired during the period of the first limit of regeneration power include at least one of a voltage across terminals, a current value, a state of charge (SOC), a state of health (SOH), and an internal resistance value of the cell batteries, for example.

For example, the amount of regeneration is varied into at least two different states during the regeneration in the period of the first limit of regeneration power, and a cell battery that reaches a maximum voltage during the regeneration can be identified according to the states of the cell batteries under each of the at least two different states.

Advantageous Effects of Invention

According to the present invention, limit of regeneration power is started immediately after a braking request for a vehicle has been received according to a predetermined regeneration power limiting amount and before states of all cell batteries have been detected, and thereby the cell batteries are securely prevented from reaching a regeneration inhibiting voltage even in an initial period of braking in which the vehicle speed is high. Because the regeneration power limiting amount in the period of the second limit of regeneration power is determined according to detected states of the cell batteries that have been acquired during the period of the first limit of regeneration power, a relatively large amount of regeneration, which is close to an upper limit at which no cell battery would reach the regeneration inhibiting voltage, can be obtained in the period of the second limit of regeneration power. Accordingly, the present invention can securely prevent degradation of the cell batteries and recover larger regenerated energy at the same time.

Brief Description of Drawings

[Figure 1] Figure 1 is an explanatory drawing which illustrates a configuration of an entire electric power-train system for a vehicle as an embodiment of a regeneration control device of the present invention.
[Figure 2] Figure 2 is a flow chart which illustrates an example of regeneration control performed when braking is requested.
[Figure 3] Figure 3 is a flow chart which illustrates another example of the regeneration control performed when braking is requested.
[Figure 4] Figure 4 is a flow chart which illustrates yet another example of the regeneration control performed when braking is requested.

[Figure 5] Figure 5 is a flow chart which illustrates yet another example of the regeneration control performed when braking is requested.

[Figure 6] Figure 6 is a flow chart which illustrates yet another example of the regeneration control performed when braking is requested.

[Figure 7] Figure 7 is an explanatory drawing which illustrates variation of battery currents and the like occurring during regeneration control in series of time of transmitting and receiving of data.

[Figure 8] Figure 8 is an explanatory drawing which illustrates different operations corresponding to two different cases (Case 1 and Case 2) with different states of cell batteries.

[Figure 9] Figure 9 is a flow chart for determination of the presence of a braking request, which is a part of regeneration control.

[Figure 10] Figure 10 is a block diagram of a process for calculating required braking force of the electric power-train system.

[Figure 11] Figure 11 is a flow chart which illustrates a part of the regeneration control illustrated in Figure 6.

[Figure 12] Figure 12 is a flow chart which illustrates a part of the regeneration control illustrated in Figure 6.

[Figure 13] Figure 13 is a flow chart which illustrates a part of the regeneration control illustrated in Figure 6.

[Figure 14] Figure 14 is a flow chart which illustrates a part of the regeneration control illustrated in Figure 6.

[Figure 15] Figure 15 is a flow chart which illustrates a part of the regeneration control illustrated in Figure 6.

[Figure 16] Figure 16 is an explanatory drawing which illustrates an entire configuration of another embodiment of the electric power-train system.

[Figure 17] Figure 17 is an explanatory drawing which illustrates an entire configuration of yet another embodiment of the electric power-train system.

Description of Embodiments

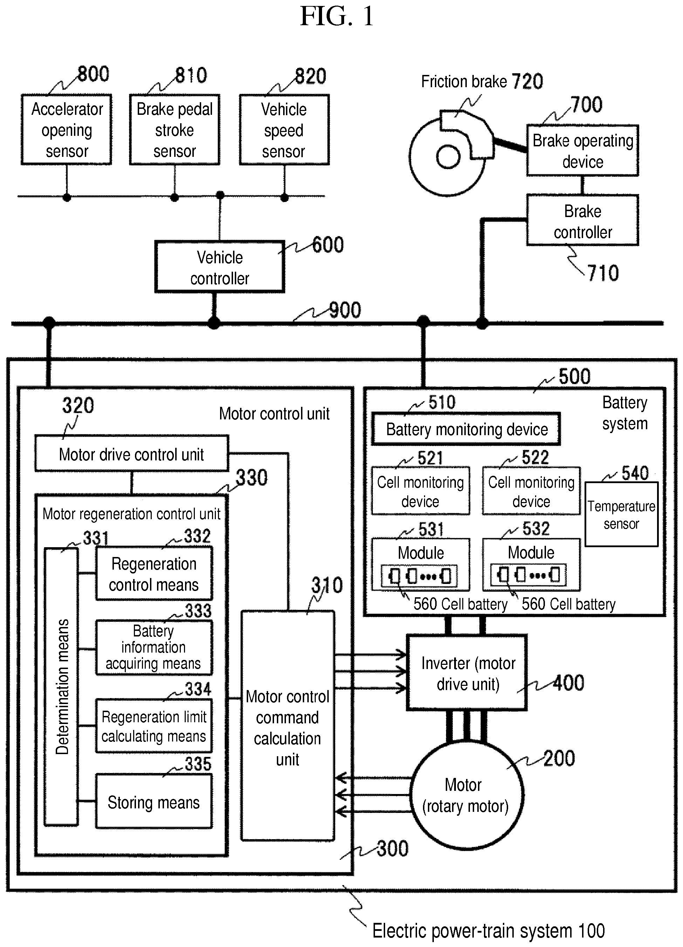

Figure 1 illustrates an example of an electric power-train system 100 to which a regeneration control device of the present invention is applied as an outline of the entire system.

The electric power-train system 100 includes a motor 200 which is a rotary motor, an inverter 400 which is a motor drive unit, a motor control unit 300 which outputs a control command for the inverter, and a battery system 500 which supplies power to the inverter 400.

The motor control unit 300 of the electric power-train 100 is installed in a vehicle, and is connected via a vehicle controller 600, which controls the entire vehicle, a brake controller 710, which operates a command for a brake operating device 700 which operates a friction brake 720, and a control area network 900.

The vehicle controller 600 which controls the entire vehicle receives detection signals from sensors such as an accelerator opening sensor 800, a brake pedal stroke sensor 810, and a vehicle speed sensor 820 and calculates a command for the electric power-train 100 according to operations by a driver and a state of the vehicle.

In addition, the brake controller 710 determines distribution of the friction brake and a regeneration brake of the electric power-train 100 and performs cooperation control of the friction brake 720 and the regeneration brake of the electric power-train 100.

The battery system 500 is constituted by a plurality of battery modules (531, 532, ...), each including a plurality of chargeable/dischargeable cell batteries (hereinafter referred to as "cell batteries" or "cells") 560 such as a lithium-ion battery, cell monitoring devices (521, 522, ...) that detect states of the cell batteries 560 included in the battery modules (531, 532, ...) for each of the battery modules (531, 532, ...), a temperature sensor 540 which detects various types of temperatures in the battery system 500, and a battery monitoring device 510 which detects a state of the entire battery system 500 on the basis of information from the cell monitoring device (521, 522, ...) and information from the temperature sensor 540.

The motor control unit 300 includes a motor control command calculation unit 310, which calculates a command for driving the inverter 400, a motor drive control unit 320, which calculates a motor drive torque control command on the basis of a request for driving force and braking force transmitted from 600, and a motor regeneration control unit 330, which calculates a motor braking torque control command.

The motor control command calculation unit 310 of the motor control unit 300 acquires a rotation angle signal from a rotation angle sensor (not illustrated) installed in the motor 200 and a detection value of three phase AC current from a current sensor (not illustrated) installed in the motor 200, calculates a drive command for the inverter 400, which implements a motor torque command calculated by the motor drive control unit 320 or the motor regeneration control unit 330, and outputs the command to the inverter 400 to drive the inverter 400.

The motor drive control unit 320 calculates a drive torque command that can be output by the motor 200, the inverter 400, and the battery system 500 according to a driving force request from the vehicle controller 600 that is a higher-order controller and outputs a drive torque command to the motor control command calculation unit 310.

The motor regeneration control unit 330 calculates a brake torque command that can be output by the motor 200, the inverter 400, and the battery system 500 according to a braking force request from the vehicle controller 600 that is a higher-order controller or the brake controller 710 and outputs a drive torque command to the motor control command calculation unit 310. Note that details of a process performed by the motor regeneration control unit 330 will be described later below.

The inverter 400 controls driving of and regeneration operations by the motor 200 in accordance with a drive signal corresponding to pulse width modulation (PWM) output from the motor control command calculation unit 310 of the motor control unit 300 according to a torque command. For example, during driving of the motor 200, the inverter 400 converts DC power output from the battery system 500 into three phase AC power and supplies the power to the motor 200, and during regeneration of the motor 200, the inverter 400 converts three phase AC power output from the motor 200 into DC power and charges the battery system 500.

The motor 200 includes a permanent magnet type three phase AC synchronous motor and the like that uses a permanent magnet as a field magnet and is driven and controlled by the three phase AC power supplied from the inverter 400, and while the vehicle is decelerated, the driving force is transmitted from drive wheels to the motor 200, and as the motor 200 functions as a generator to generate regeneration braking force, the kinetic energy in the vehicle can be recovered as electric energy.

In the embodiment in Figure 1, the motor regeneration control unit 330 includes determination means 311, regeneration control means 332, the battery information acquiring means 333, regeneration limit calculating means 334, and storing means 335.

The determination means 331 of the motor regeneration control unit 330 receives a braking request signal from the vehicle controller 600, receives a state of the battery system 500 from the battery monitoring device 510 of the battery system 500, performs determination to carry out regeneration by the motor 200 and the inverter 400, and transmits regeneration limit information based on the state of the battery system 500 to the vehicle controller 600 and the brake controller 710.

Specifically, according to the braking request determined by the vehicle controller 600 based on an operation of the accelerator and an operation of the brake by the driver, the determination means 331 of the motor regeneration control unit 330 determines the presence of a regeneration request. According to the result of the determination, the battery information acquiring means 333 acquires battery information, such as states of the cell batteries 560 of the battery system 500, states of the battery modules (531, 532), temperature information, from the battery monitoring device 510 which monitors the state of the entire battery system 500. The battery information acquiring means 333 acquires the battery information output from the battery monitoring device 510 and interrupts the process to request the determination means 331 to transmit the battery information to the battery monitoring device 510 at a timing when it is determined that acquisition of the battery information is necessary.

The battery information acquiring means 333 acquires information such as a total voltage value and current signal values of all the batteries of the battery system 500, voltage values and current values of the cell batteries 560 included in each battery, estimation for internal resistance calculated within the battery system 500 and the cell monitoring device (521, 522), estimation for total opening voltage of all the batteries, estimation for opening voltage of each of the cell batteries 560, and a temperature detection value from the plurality of temperature sensor 540 installed within the battery system 500.

Various detection values and estimation values of the inside of the battery system 500 acquired by the battery information acquiring means 333 and the like are stored in the storing means 335. In the storing means 335, battery information to be stored in a short term for a predetermined time period and battery information to be stored for a long time period is classified from each other, and the determination means 331 determines the state of the battery system 500 according to the battery information stored on the storing means 335 and performs various processes.

If it is determined by the determination means of the motor regeneration control unit 330 that a regeneration request has been input according to the braking request having been determined by the vehicle controller 600 according to driver's operations of the accelerator and the brake, then the battery information acquiring means 333 acquires the battery information and the regeneration control means 332 performs regeneration control after the regeneration request.

If a regeneration request is received from the determination means 331, the regeneration control means 332 calculates a regeneration torque command based on the regeneration power limiting amount having been set by the regeneration limit calculating means 334. The regeneration torque command which has been calculated by the regeneration control means 332 is transmitted to the motor control command calculation unit 310, and the motor control command calculation unit 310 calculates a current command for the inverter on the basis of the transmitted regeneration torque command.

In the determination means 331, a torque command for regeneration control is calculated by the regeneration control means 332 according to the regeneration limit set by the regeneration limit calculating means 334, and the motor regeneration control unit 330 transmits the regeneration power limiting amount of the motor 200 and the inverter 400, as the regeneration amount that can be regenerated, to the vehicle controller 600 that is a higher-order controller and to the brake controller 710 for regeneration cooperation control. With respect to the regeneration power limiting amount, the regeneration power limiting amount is set by the regeneration limit calculating means 334 before the regeneration control torque command is calculated by the regeneration control means 332. Accordingly, the regeneration power limiting amount is transmitted to the vehicle controller 600 that is a higher-order controller and the brake controller 710 before the regeneration control torque command is calculated by the regeneration control means 332, and thereby the vehicle controller 600 and the brake controller 710 can acquire the amount of power that can be regenerated by the motor 200 and the inverter 400. Accordingly, distribution of braking between the regeneration brake and the friction brake can be determined according to the limit of regeneration power. Accordingly, excellent distribution and switching between the friction brake and the regeneration brake during the regeneration cooperation control can be implemented.

In one embodiment of the present invention, if a braking request is received, the determination means 331 first selects a regeneration power limiting amount with which none of the cell batteries 560 constituting the battery system 500 in the current state would cause overvoltage in which the charge/regeneration inhibiting voltage is reached from the regeneration limit calculating means 334, and the regeneration control means 332 calculates a regeneration torque command for controlling the regeneration amount to be equal to or lower than the regeneration power limiting amount according to the selected regeneration power limiting amount. The regeneration power limiting amount with which none of the cell batteries 560 constituting the battery system 500 in the current state would cause overvoltage in which the charge/regeneration inhibiting voltage is reached is set by using last information about the battery system 500 which has been stored in the storing means 335. For example, when the total state of charge (SOC) of the battery system 500 is high or when the temperature of the battery system 500 is low, overvoltage in which the overvoltage in which the charge/regeneration inhibiting voltage is reached may easily occur. In this case, a regeneration current with which the overvoltage in which the charge/regeneration inhibiting voltage is reached would not be reached can be set on the basis of an average internal resistance of the battery system 500 and the total open circuit voltage (OCV). For example, a limit of regeneration power is set with which the regeneration current becomes a regeneration current even lower than a limit regeneration current with which the above-described charge/regeneration inhibiting voltage would not be reached.

When a braking request is received, the regeneration control means 332 transmits, on the basis of the regeneration limit set by the regeneration limit calculating means 334, a regeneration torque command calculated based on the regeneration limit, and further, according to the command from the determination means 331, the battery information acquiring means 333 issues a request to the battery monitoring device 510 of the battery system 500 for transmission of the battery information. The battery information includes detection values or estimation values that denote the states of the cell batteries 560, such as the values of the voltage across terminals, the current values, and the internal resistance values of the cell batteries 560 constituting the battery system 500, values of temperature in the battery system 500, values of state of charge (SOC) of the cell batteries 560, values of state of health (SOH) of the cell batteries 560, and values of open circuit voltage (OCV) of the cell batteries 560, detection values or estimation values that denote the states of the modules, such as the values of the voltage across terminals, the current values, and the internal resistance values of the battery module (531, 532) including the plurality of cell batteries 560, temperature values of the module, an average value of states of charge (SOC) of the module, an average value of states of health (SOH) of the module, and an average value of open circuit voltages (OCVs) of the module, and values of the entire battery system, such as the value of the voltage across terminals (total voltage value), the current value, an average temperature value, an average value of states of charge (SOC), an average value of states of health (SOH), and an average value of open circuit voltages (OCVs) of the entire battery system.

The battery information acquiring means 333 transmits a battery information acquisition request to the battery monitoring device 510, receives the battery information transmitted from the battery monitoring device 510, and stores the received battery information in the storing means 335. If it is determined by the determination means 331 that the battery information acquiring means 333 has acquired a plurality of different pieces of battery information and the battery information has been stored in the storing means 335, then the determination means 331 determines that determination of the state of the battery system 500 has become possible, and the regeneration limit calculating means 334 performs calculation of the regeneration power limiting amount. According to the result of the determination by the determination means 331, the regeneration limit calculating means 334 reads the battery information that has been transmitted from the battery monitoring device 510 and stored in the storing means 335 and determines the state of the battery system 500. In particular, the regeneration limit calculating means 334 determines the state of each cell battery 560 included in the battery system 500 and identifies a cell battery that is likely to cause overvoltage in which charge/regeneration inhibiting voltage is reached during regeneration. In addition, the regeneration limit calculating means 334 acquires the values of the voltage across terminals, the current values, the values of state of charge (SOC), values of state of health (SOH), and the like including a plurality of sampling values and their average of the identified specific cell battery 560 that is likely to cause overvoltage in which the charge/regeneration inhibiting voltage is reached during regeneration, which are stored in the storing means 335, and sets an upper limit of the amount of regeneration with which the charge/regeneration inhibiting voltage would not be reached or an upper limit of the regeneration current. The information about the cell batteries 560 read by the regeneration limit calculating means 334 from the storing means 335 is information about the battery system 500 for a time period in which the regeneration limit has been performed by the regeneration control means 332 according to the braking request, and because the regeneration control means 332 continues to perform the regeneration limit while the information is acquired and read, the voltage of the cell batteries 560 of the battery system 500 would not reach charge/regeneration inhibiting voltage.

After the regeneration power limiting amount or the regeneration current limiting amount has been set by the regeneration limit calculating means 334, the determination means 331 stores the set regeneration power limiting amount or the regeneration current limiting amount in the storing means 335 and also transmits the regeneration power limiting amount that can be regenerated by the motor 200 and the inverter 400 to the vehicle controller 600 that is the higher-order controller or the brake controller 710. The higher-order controller 600 and the brake controller 710 can thereby acquire the amount available for regeneration braking and determine the distribution of braking between the regeneration brake and the friction brake.

After the regeneration power limiting amount has been set, the vehicle controller 600 that is the higher-order controller or the brake controller 710 calculates a regeneration braking request value according to the regeneration power limiting amount and outputs the calculated value to the motor control unit 300 as a regeneration braking command. The regeneration braking command is transmitted to the regeneration control means 332 to calculate a regeneration torque command there based on the regeneration power limiting amount or the regeneration current limiting amount.

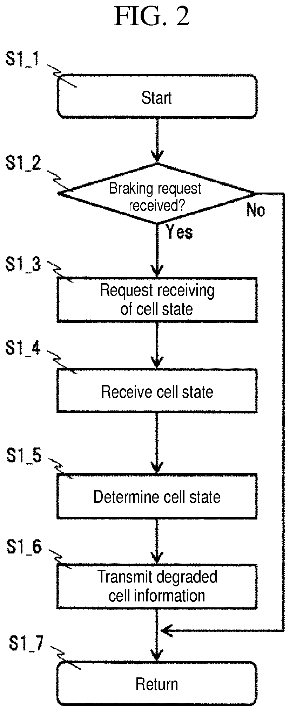

Figure 2 is a flow chart which illustrates an example of the regeneration control by the electric power-train system of the present invention.

First, the motor regeneration control unit 330 of the motor control unit 300 in Figure 1 determines the presence or absence of a braking request signal output from the vehicle controller 600 illustrated in Figure 1 (S1-2). If no braking request has been received, the process proceeds to S1-7 and continues the determination on whether any braking request has been received. If it is determined in S1-2 that a braking request signal has been received, the process proceeds to S1-3. In S1-3, the motor regeneration control unit 330 of the motor control unit 300 illustrated in Figure 1 outputs a request for transmission of the state of the cell batteries 560 constituting the battery system 500 to the battery monitoring device 510 which monitors the state of the battery system 500. Consequently, the battery monitoring device 510 of the battery system 500 outputs information about the cell batteries 560 at the timing of receipt of the braking request and the motor regeneration control unit 330 of the motor control unit 300 acquires the information about the cell batteries 560 (S1-4). After the information about the cell batteries 560 has been acquired a plurality of times, the motor regeneration control unit 330 of the motor control unit 300 determines the state of the cell batteries 560 based on the acquired cell battery information (S1-5). The cell battery information includes values of the voltage across terminals, concurrent current values, estimation for state of charge (SOC), estimation for state of health (SOH), estimation of internal resistance, and the like of the cell batteries 560, and physical quantities that denote the states of the cell batteries 560 correspond to the cell battery information. The determination of the state of the cells performed in S1-5 includes, identification of a cell battery 560 with the highest voltage across terminals among the multiple cell batteries 560 constituting the battery system 500 as a cell battery that becomes a constraint during regeneration, identification of the cell battery that becomes a constraint by estimating the open circuit voltage values and the internal resistance of the cell batteries 560 from the values of the voltage across terminals and the current values of a plurality of states (e.g., states at a plurality of different battery current values) of the cell batteries 560, by determining whether the capacity has degraded from the open circuit voltage, and by determining whether the resistance has degraded from the internal resistance, and the like.

After the determination of the states of the cells has been completed (SI-5), the cell battery the cell batteries 560 that can cause overvoltage in which the charge/regeneration inhibiting voltage is reached during regeneration (hereinafter referred to as a "constraint cell battery" or a "degraded cell battery") can be identified, and the motor regeneration control unit 330 of the motor control unit 300 transmits the information about the specific degraded cell battery 560 (S1-6).

After the motor regeneration control unit 330 of the motor control unit 300 has transmitted the information about the degraded cell battery 560 that becomes a constraint during regeneration, limits of regeneration power to be set thereafter can be set on the basis of the transmitted information. Examples of the information about the degraded cell battery include information such as estimation of internal resistance, an upper limit value of current at which the overvoltage in which the charge/regeneration inhibiting voltage is reached is reached, and open circuit voltage values.

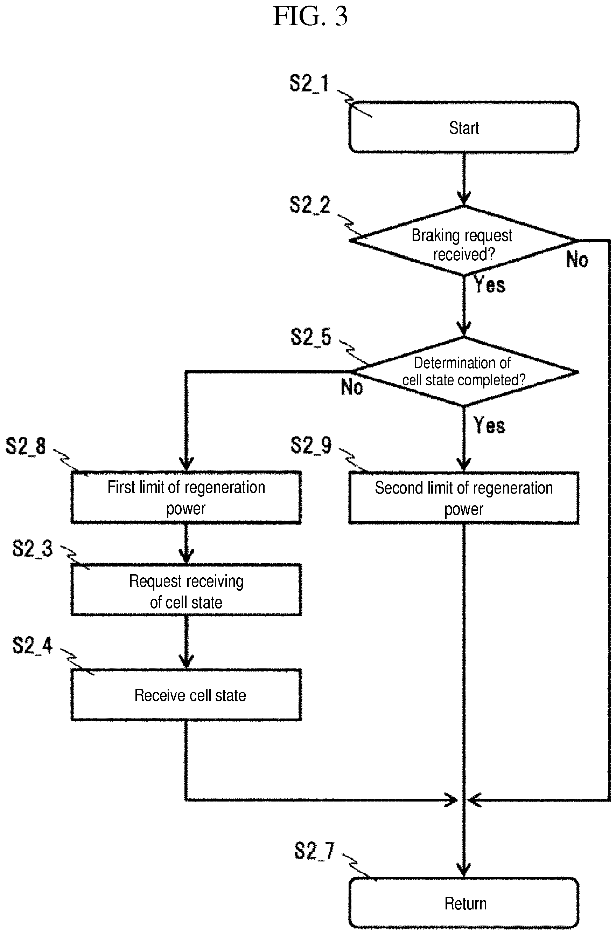

Figure 3 is a flow chart which illustrates a different example of the regeneration control by the electric power-train system 100 of the present invention.

In the example illustrated in Figure 3 also, similar to Figure 2, first, the motor regeneration control unit 330 of the motor control unit 300 in Figure 1 determines the presence or absence of a braking request signal output from the vehicle controller 600 illustrated in Figure 1 (S2-2). If no braking request has been received, the process proceeds to S2-7 and continues the determination on whether any braking request has been received. If it is determined in S2-2 that a braking request signal has been received, the process proceeds to S2-5.

In S2-5, the states of the cell batteries 560 are determined by using the information about the cell batteries 560 constituting the battery system 500, which has been acquired from the battery monitoring device 510. If the determination of the states of the cells has been completed, then the process proceeds to S2-9. At a timing immediately after the braking request has been received, the information about the cell batteries 560 constituting the battery system 500 may be yet to be received from the battery monitoring device 510 in some cases and thus the determination of the cell states is usually yet to be completed in such cases, and the process therefore proceeds to S2-8.

The cell battery information includes values of the voltage across terminals, concurrent current values, estimation for state of charge (SOC), estimation for state of health (SOH), estimation of internal resistance, and the like of the cell batteries 560, and physical quantities that denote the states of the cell batteries 560 correspond to the cell battery information. The determination of the state of the cells performed in S2-5 includes, identification of a cell battery 560 with the highest voltage across terminals among the multiple cell batteries 560 constituting the battery system 500 as a cell battery that becomes a constraint during regeneration, identification of the cell battery that becomes a constraint by estimating the open circuit voltage values and the internal resistance of the cell batteries 560 from the values of the voltage across terminals and the current values of a plurality of states (e.g., states at a plurality of different battery current values) of the cell batteries 560, by determining whether the capacity has degraded from the open circuit voltage, and by determining whether the resistance has degraded from the internal resistance, and the like. In other words, with respect to the determination of the cell states, the cell battery information about all the cell batteries 560 is transmitted from the battery monitoring device 510 at least once or a plurality of times, and thereby it becomes possible to determine the cell states.

If it is determined that the determination of the cell states has not been completed yet in S2-5, then the process proceeds to S2-8 and a first limit of regeneration power is performed. Note that because the determination of the cell states is basically not completed for the first time of the determination as described above, then the process proceeds to S2-8 in this case.

The first limit of regeneration power in S2-8, which will be described later below, is a regeneration control performed within a time period after a timing at which a regeneration request has been received by the motor regeneration control unit 330 of the motor control unit 300 and before a timing at which the determination of the cell states is completed after having output a request for receiving the information about the cell batteries 560 constituting the battery system 500 is output to the battery monitoring device 510 and having acquired the cell battery information from the battery monitoring device 510 a plurality of times. In the first limit of regeneration power, because correct states of the cell batteries 560 constituting the battery system 500 have not been acquired yet, if the regeneration control is performed on the basis of the amount of regeneration requested from the higher-order vehicle controller 600 and the brake controller 710 as a command and if the amount of regeneration requested from the higher-order controller is large, then it is possible that a cell degraded battery 560 may exist that reaches a charge inhibiting voltage, for example, among the cell batteries 560 constituting the battery system 500. Accordingly, in the first limit of regeneration power, regeneration control is performed in which the amount of regeneration is limited to a small amount of regeneration with which the charge inhibiting voltage would not be reached. If the motor regeneration control unit 330 of the motor control unit 300 limits the amount of regeneration to a small amount of regeneration in the first limit of regeneration power, the requested braking cannot be implemented because the amount of regeneration requested from the higher-order vehicle controller 600 and the brake controller 710 cannot be achieved. However, since the first limit of regeneration power is a limit of regeneration power performed when a braking request has been received and in a period before the determination of the cell states, the requested braking can be implemented because the higher-order vehicle controller 600 and the brake controller 710 can set the distribution between the regeneration brake and the friction brake considering the limit of regeneration power by the first limit of regeneration power by previously setting an amount of regeneration performed in the first limit of regeneration power and transmitting the same to the higher-order vehicle controller 600 or the brake controller 710. Further, by performing a setting so that the regeneration current value in the first limit of regeneration power becomes constant, values of the voltage across terminals of the cell batteries 560 can be detected in the period of the first limit of regeneration power under the same current condition, which thereby enables stable detection of the cell battery states. In addition, alternatively to using the constant current value, it is possible to use a state of regeneration for the period in which the first limit of regeneration power is performed that is appropriate for detection of the states of the cell batteries 560.

After the first limit of regeneration power is started, a request for receiving the states of cell batteries is output (S2-3). In S2-3, the motor regeneration control unit 330 of the motor control unit 300 in Figure 1 outputs a request to the battery monitoring device 510 which monitors the state of the battery system 500 so that the states of the cell batteries 560 are transmitted. Consequently, the battery monitoring device 510 of the battery system 500 outputs information about the cell batteries 560 at the timing of receipt of the braking request, and the motor regeneration control unit 330 of the motor control unit 300 acquires the information about the cell batteries 560 (S2-4). However, depending on the transmission period of the battery monitoring device 510, the cell battery information cannot be acquired in the same control period in some cases even if a receiving request from the motor regeneration control unit 330 has been received.

After the information about the cell batteries 560 is received from the battery monitoring device 510 of the battery system 500 (or after the acquisition timing has come even when the information has not been received), the process returns to S2-2. If the braking request (S2-2) has been continued, the determination of whether the determination of the cell states (S2-5) has been completed is repeated.

In transmitting the cell battery information from the battery monitoring device 510, it is necessary to detect the states of the plurality of cell batteries included in the battery system 500, and if it takes a long time to detect the states, delay may occur until the determination of the cell states is completed. Therefore, in some cases, the period of receiving the cell battery information may be delayed in relation to the control period in which the motor regeneration control unit 330 of the motor control unit 300 performs the regeneration control. Accordingly, before the determination of the cell states in S2-5 is completed after having received the cell battery information, the motor regeneration control unit 330 of the motor control unit 300 proceeds to S2-8 to perform the first limit of regeneration power and repeat the request for receiving the cell battery information and the receiving of the cell battery information.

In the cell state determination process of S2-5, after the motor regeneration control unit 330 of the motor control unit 300 has acquired the cell battery information from the battery monitoring device 510 for a plurality of times, the states of the cell batteries 560 constituting the battery system 500 is determined on the basis of the acquired cell battery information. As described above, the cell battery information includes values of the voltages across terminals, concurrent current values, estimation for state of charge (SOC), estimation for state of health (SOH), estimation of internal resistance, and the like of the cell batteries 560, and physical quantities that denote the states of the cell batteries 560 correspond to the cell battery information. The determination of the cell states include identification of the constraint cell battery that becomes a constraint during regeneration.

After the determination of the cell states in S2-5 is completed, the process proceeds to the second limit of regeneration power (S2-9). In the second limit of regeneration power in S2-9, because the determination of the cell states has been completed in S2-5 and thus the cell battery that becomes a constraint during regeneration has been identified, an upper limit regeneration amount or an upper limit value of regeneration current for preventing the voltage of the identified cell battery from reaching the charge inhibiting voltage can be set as the regeneration power limiting amount. Accordingly, in the second limit of regeneration power, regeneration control is performed on the basis of information about the constraint cell battery acquired as a result of the completion of the determination of the cell batteries and the upper limit regeneration amount or the upper limit value of regeneration current.

If the motor regeneration control unit 330 of the motor control unit 300 arbitrarily limits the upper limit regeneration amount or the upper limit regeneration current in the second limit of regeneration power, the requested braking cannot be implemented in some cases because the amount of regeneration requested from the higher-order vehicle controller 600 and the brake controller 710 cannot be achieved. However, since the value for the limit of regeneration power such as the upper limit regeneration amount or the upper limit value of regeneration current is set after the determination of the cell states is completed when a braking request has been received in the second limit of regeneration power, the requested braking can be implemented because the higher-order vehicle controller 600 and the brake controller 710 can set the distribution between the regeneration brake and the friction brake considering the limit of regeneration power by the second limit of regeneration power by previously transmitting the set limit of regeneration power to the higher-order vehicle controller 600 or the brake controller 710.

After the second limit of regeneration power is started, the process returns to S2-2 and repeats the determination of the braking request (S2-2) and the determination of completion of the determination of the cell states (S2-5).

By performing the above-described process, when a braking request is received, the first limit of regeneration power for limiting the amount of regeneration with which the charge/regeneration inhibiting voltage is not reached is immediately performed, detailed information about the cell batteries 560 constituting the battery system 500 is acquired while the first limit of regeneration power is being performed, the states of the cell batteries 560 are determined, and the upper limit regeneration amount or the upper limit value of regeneration current with which the voltage across terminals of the cell battery that becomes a constraint during the regeneration would not reach the charge inhibiting voltage is set to perform the second limit of regeneration power, and thereby upper limit regeneration can be performed in which the cell battery that is likely to reach the charge inhibiting voltage and most likely to become a constraint among the cell batteries 560 constituting the battery system 500 would not reach the charge/regeneration inhibiting voltage.

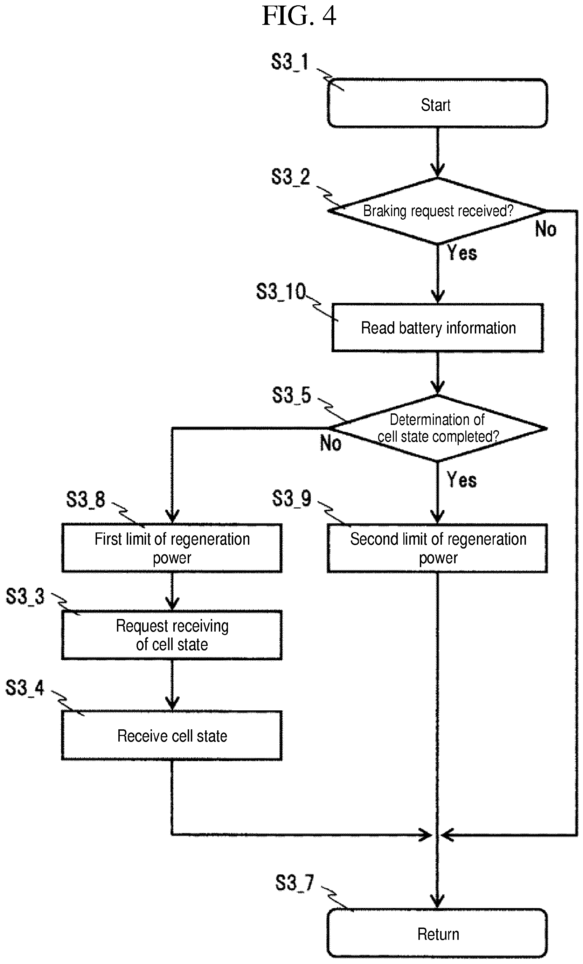

Next, Figure 4 is a flow chart which illustrates a different yet another example of the regeneration control performed by the electric power-train 100 of the present invention.

In the example illustrated in Figure 4 also, similar to Figures 2 and 3, first, the presence or absence of a braking request signal output from the vehicle controller 600 illustrated in Figure 1 is determined (S3-2). If no braking request has been received, the process proceeds to S3-7 and continues the determination on whether any braking request has been received. If it is determined in S3-2 that a braking request signal has been received, the process proceeds to S3-10 and the information about the battery system 500 and the cell batteries 560 included therein, which has been already acquired from the battery monitoring device 510 of the battery system 500, is read from the storing means 335 of the motor regeneration control unit 330 (S3-10).

In other words, in S3-10, in order to perform the first limit of regeneration power in the following S3-8, the already acquired information about the battery system 500 is acquired from the motor regeneration control unit 330. The information about the battery system 500 includes information which indicates the states of the battery system 500 that has been transmitted from the battery monitoring device 510 before the braking request, such as values of state of charge (SOC) of the entire battery system 500, a total voltage value of the entire battery system 500, and variation of the voltages across terminals and the internal resistances of the cell batteries 560 constituting the battery system 500. Based on this information, an approximate value of the regeneration power limiting amount or a regeneration current limiting value with which the voltages across terminals of the cell batteries 560 would not become overvoltage in which the charge/regeneration inhibiting voltage is reached can be set, and further, if a limit lower than the setting value is set, the limit of regeneration power can be performed in which no cell battery would cause overvoltage in which the charge/regeneration inhibiting voltage is reached.

After the battery information has been read in S3-10, the process proceeds to S3-5. In S3-5, by using the information about the cell batteries 560 acquired from the battery monitoring device 510, the states of the cell batteries 560 constituting the battery system 500 is determined. If the determination of the cell states has been completed, the process proceeds to S3-9. Similarly to S2-5 in Figure 3, at a timing immediately after the braking request has been received, the information about the cell batteries 560 constituting the battery system 500 may be yet to be received from the battery monitoring device 510 in some cases and thus the determination of the cell states is usually yet to be completed in such cases, and the process therefore proceeds to S3-8. As described above with reference to Figure 3, the cell battery information includes values of the voltage across terminals, concurrent current values, estimation for state of charge (SOC), estimation for state of health (SOH), estimation of internal resistance, and the like of the cell batteries 560. The determination of the cell states performed in S3-5 includes identification of the constraint cell battery that becomes the worst constraint during the regeneration. In other words, with respect to the determination of the cell states, the cell battery information about all the cell batteries 560 is transmitted from the battery monitoring device 510 at least once or a plurality of times, and thereby it becomes possible to determine the cell states.

If it is determined in S3-5 that the determination of the cell states has not been completed yet, then the process proceeds to S3-8 and the first limit of regeneration power is performed. The first limit of regeneration power in S3-8, as described above with reference to Figure 3, is a regeneration control performed within a time period after a timing at which a regeneration request has been received by the motor regeneration control unit 330 of the motor control unit 300 and before a timing at which the determination of the cell states is completed after having output a request for receiving the information about the cell batteries 560 constituting the battery system 500 is output to the battery monitoring device 510 and having acquired the cell battery information from the battery monitoring device 510 a plurality of times. In the first limit of regeneration power, regeneration control is performed in which the amount of regeneration is limited to a small amount of regeneration with which the charge inhibiting voltage would not be reached, and in the present embodiment, the information about the battery system 500 has been acquired in S3-10 and by using the information, an approximate value of the regeneration power limiting amount or a regeneration current limiting value with which the voltages across terminals of the cell batteries 560 would not become overvoltage in which the charge/regeneration inhibiting voltage is reached can be set, and further, if a regeneration power limiting amount smaller than the setting value is set, limit of regeneration power can be performed in which no cell battery would cause overvoltage in which the charge/regeneration inhibiting voltage is reached. The amount of limit for the first limit of regeneration power is determined according to the information about the battery system 500 acquired in S3-10 in the above-described manner. The setting of the regeneration power limiting amount or the regeneration current limiting value with which the voltages across terminals of the cell batteries 560 would not become overvoltage in which the charge/regeneration inhibiting voltage is reached is performed when the first limit of regeneration power is performed for the first time, and the limit of regeneration power is performed on the basis of the limiting value that has been set first during a time period in which the braking request has been continued.

Note that as described above with reference to Figure 3, if the motor regeneration control unit 330 of the motor control unit 300 limits the amount of regeneration to a small amount of regeneration in the first limit of regeneration power, the requested braking cannot be implemented because the amount of regeneration requested from the higher-order vehicle controller 600 and the brake controller 710 cannot be achieved. However, since the first limit of regeneration power is a limit of regeneration power performed when a braking request has been received and in a period before the determination of the cell states, the requested braking can be implemented because the higher-order vehicle controller 600 and the brake controller 710 can set the distribution between the regeneration brake and the friction brake considering the limit of regeneration power by the first limit of regeneration power by previously transmitting the amount of regeneration performed in the first limit of regeneration power set in S3-8 to the higher-order vehicle controller 600 or the brake controller 710. Further, by performing a setting so that the regeneration current value in the first limit of regeneration power becomes constant, values of the voltage across terminals of the cell batteries 560 can be detected in the period of the first limit of regeneration power under the same current condition, which thereby enables stable detection of the cell battery states. In addition, alternatively to using the constant current value, it is possible to use a state of regeneration for the period in which the first limit of regeneration power is performed that is appropriate for detection of the states of the cell batteries 560.

After the first limit of regeneration power (S3-8) is started, a request for receiving the states of cell batteries is output (S3-3). In S3-3, the motor regeneration control unit 330 of the motor control unit 300 in Figure 1 outputs a request to the battery monitoring device 510 which monitors the state of the battery system 500 so that the states of the cell batteries 560 are transmitted. Consequently, the battery monitoring device 510 of the battery system 500 outputs information about the cell batteries 560 at the timing of receipt of the braking request, and the motor regeneration control unit 330 of the motor control unit 300 acquires the information about the cell batteries 560 (S3-4). However, depending on the transmission period of the battery monitoring device 510, the cell battery information cannot be acquired in the same control period in some cases even if a receiving request from the motor regeneration control unit 330 has been received.

After the information about the cell batteries 560 is received from the battery monitoring device 510 of the battery system 500 (or after the acquisition timing has come even when the information has not been received), the process returns to S3-2. If the braking request (S3-2) has been continued, the determination of whether the determination of the cell states (S3-5) has been completed is repeated.

In transmitting the cell battery information from the battery monitoring device 510, it is necessary to detect the states of the plurality of cell batteries included in the battery system 500, and if it takes a long time to detect the states, delay may occur until the determination of the cell states is completed. Therefore, in some cases, the period of receiving the cell battery information may be delayed in relation to the control period in which the motor regeneration control unit 330 of the motor control unit 300 performs the regeneration control. Accordingly, before the determination of the cell states in S3-5 is completed after having received the cell battery information, the motor regeneration control unit 330 of the motor control unit 300 proceeds to S3-8 to perform the first limit of regeneration power and repeat the request for receiving the cell battery information and the receiving of the cell battery information.

In the cell state determination process of S3-5, after the motor regeneration control unit 330 of the motor control unit 300 has acquired the cell battery information from the battery monitoring device 510 for a plurality of times, the states of the cell batteries 560 constituting the battery system 500 is determined on the basis of the acquired cell battery information. As described above, the cell battery information includes values of the voltages across terminals, concurrent current values, estimation for state of charge (SOC), estimation for state of health (SOH), estimation of internal resistance, and the like of the cell batteries 560, and physical quantities that denote the states of the cell batteries 560 correspond to the cell battery information. The determination of the cell states include identification of the constraint cell battery that becomes a constraint during regeneration.

After the determination of the cell states in S3-5 is completed, the process proceeds to the second limit of regeneration power (S3-9). In the second limit of regeneration power in S3-9, because the determination of the cell states has been completed in S3-5 and thus the cell battery that becomes a constraint during regeneration has been identified, an upper limit regeneration amount or an upper limit value of regeneration current for preventing the voltage of the identified cell battery from reaching the charge inhibiting voltage can be set. Accordingly, in the second limit of regeneration power, regeneration control is performed on the basis of information about the constraint cell battery acquired as a result of the completion of the determination of the cell batteries and the upper limit regeneration amount or the upper limit value of regeneration current.

As described above with reference to Figure 3, if the motor regeneration control unit 330 of the motor control unit 300 arbitrarily limits the upper limit regeneration amount or the upper limit regeneration current in the second limit of regeneration power, the requested braking cannot be implemented in some cases because the amount of regeneration requested from the higher-order vehicle controller 600 and the brake controller 710 cannot be achieved. However, since the setting value for the limit of regeneration power such as the upper limit regeneration amount or the upper limit value of regeneration current is set after the determination of the cell states is completed when a braking request has been received in the second limit of regeneration power, the requested braking can be implemented because the higher-order vehicle controller 600 and the brake controller 710 can set the distribution between the regeneration brake and the friction brake considering the limit of regeneration power by the second limit of regeneration power by previously transmitting the set limit of regeneration power to the higher-order vehicle controller 600 or the brake controller 710.

After the second limit of regeneration power is started, the process returns to S3-2 and repeats the determination of the braking request (S3-2) and the determination of completion of the determination of the cell states (S3-5).

In the present embodiment, by performing the above-described process, when a braking request is received, the first limit of regeneration power in which the amount of regeneration, with which the charge/regeneration inhibiting voltage is not reached is limited, is securely performed on the basis of the already acquired information about the battery system 500, detailed information about the cell batteries 560 constituting the battery system 500 is acquired while the first limit of regeneration power is being performed, and the upper limit regeneration amount or the upper limit value of regeneration current with which the voltage of the cell battery that becomes a constraint during the regeneration would not reach the charge inhibiting voltage is set to perform the second limit of regeneration power, and thereby upper limit regeneration can be performed in which the cell battery that is likely to reach the charge inhibiting voltage and most likely to become a constraint among the cell batteries 560 constituting the battery system 500 would not reach the charge/regeneration inhibiting voltage.

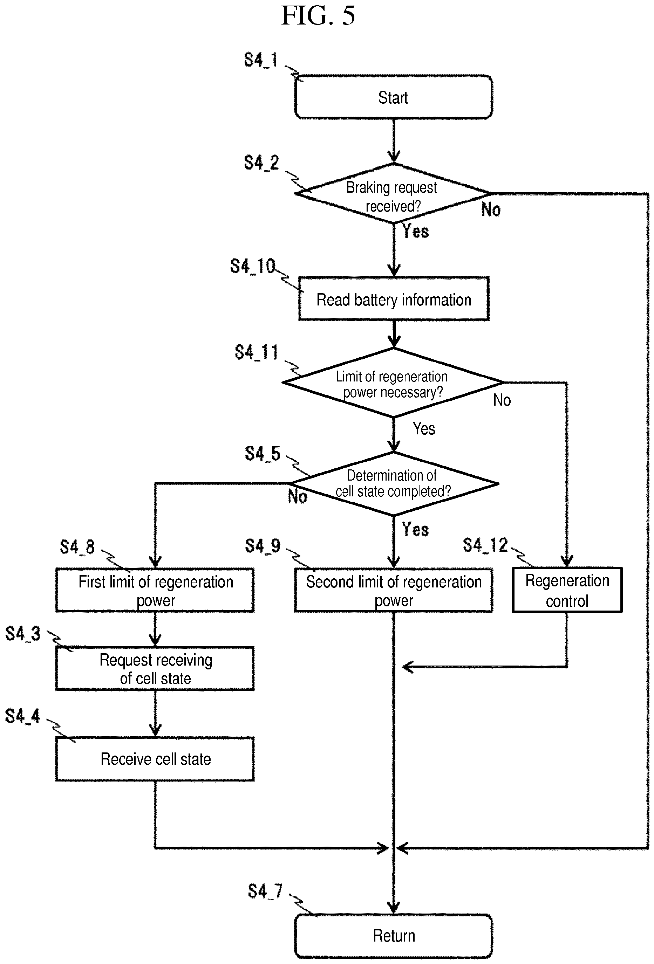

Next, Figure 5 is a flow chart which illustrates a different yet another example of the regeneration control performed by the electric power-train 100 of the present invention.

In the example illustrated in Figure 5 also, similar to Figures 2 to 4, first, the presence or absence of a braking request signal output from the vehicle controller 600 illustrated in Figure 1 is determined (S4-2). If no braking request has been received, the process proceeds to S4-7 and continues the determination on whether any braking request has been received.

If it is determined in S4-2 that a braking request signal has been received, the process proceeds to S4-10 and the information about the battery system 500 and the cell batteries 560 included therein, which has been already acquired from the battery monitoring device 510 of the battery system 500, is read from the storing means 335 of the motor regeneration control unit 330 (S4-10).

In other words, in S4-10, in order to perform the first limit of regeneration power in S4-8, the already acquired information about the battery system 500 is acquired from the motor regeneration control unit 330. This process is the same as that in S3-10 in Figure 4. The information about the battery system 500 includes information which indicates the states of the battery system 500 that has been transmitted from the battery monitoring device 510 before the braking request, such as the state of charge (SOC) of the entire battery system 500, a total voltage value of the entire battery system 500, and variation of the voltages across terminals and the internal resistances of the cell batteries 560. Based on this information, an approximate value of the regeneration power limiting amount or a regeneration current limiting value with which the voltages across terminals of the cell batteries 560 would not become overvoltage in which the charge/regeneration inhibiting voltage is reached can be set, and further, if a limit lower than the setting value is set, the limit of regeneration power can be performed in which no cell battery would cause overvoltage in which the charge/regeneration inhibiting voltage is reached. Further, in S4-10, in order to determine whether the limit of regeneration power in the subsequent step S4-11, necessary information about the battery system 500 is also read from the storing means 335 of the motor regeneration control unit 330 included in the motor control unit 300. The battery information to be read includes information such as the total voltage value, the total charged capacity, and the state of health (SOH) of the entire battery system 500, the vehicle speed value, and temperature values of parts of the battery system 500. After the battery information has been read in S4-10, the process proceeds to S4-11.

In S4-11, it is determined whether limit of regeneration power is necessary based on the read battery information. For example, if the value of the total state of charge (SOC) of the battery system 500 is low and if it is determined that overvoltage in which the charge/regeneration inhibiting voltage would not occur in any of the cell batteries 560, then it is determined that it is not necessary to perform limit of regeneration power. If the value of the state of charge (SOC) is high, it is determined that it is necessary to perform the limit of regeneration power because it is likely that overvoltage in which the charge/regeneration inhibiting voltage is reached occurs. If the temperature of the parts of the battery system 500 is low, the voltages across terminals would increase even at the same regeneration current value because the internal resistance of the cell batteries 560 constituting the battery system 500 becomes high, and therefore it is determined that overvoltage in which the charge/regeneration inhibiting voltage is reached is likely to occur and that it is necessary to perform the limit of regeneration power. On the other hand, if the temperature of the battery system 500 is normal temperature, the internal resistance is low, and it is therefore determined that overvoltage in which the charge/regeneration inhibiting voltage is reached would not occur and that it is not necessary to perform the limit of regeneration power. Further, if it is determined that the state of health (SOH) of the cell batteries 560 constituting the battery system 500 has become worse and that the battery system has been degraded, then it is determined that it is necessary to perform the limit of regeneration power because the internal resistance is high and overvoltage in which the charge/regeneration inhibiting voltage is reached is likely to occur in this case. If the vehicle speed is low, the amount of regeneration that can be regenerated becomes small, and thus it is determined that overvoltage in which the charge/regeneration inhibiting voltage is reached would not occur and that it is not necessary to perform the limit of regeneration power. As described above, whether limit of regeneration power is necessary can be determined by using the battery states and the vehicle states at a relatively latest time before the regeneration.

If it is determined in S4-11 that the limit of regeneration power is unnecessary, then the process proceeds to S4-12 and normal regeneration control is performed. On the other hand, it is determined in S4-11 that the limit of regeneration power is necessary, then the process proceeds to S4-5.

In S4-5, similarly to S3-5 described above with reference to Figure 4, states of the cell batteries 560 are determined by using the information acquired from the battery monitoring device 510. Similarly to S3-5 in Figure 4, at a timing immediately after the braking request has been received, the information about the cell batteries 560 constituting the battery system 500 may be yet to be received from the battery monitoring device 510 in some cases and thus the determination of the cell states is usually yet to be completed sin such cases, and the process therefore proceeds to S4-8. The cell battery information and the determination of the cell states performed in S4-5 are the same as those described above with reference to Figures 3 and 4.

If it is determined in S4-5 that the determination of the cell states has not been completed yet, then the process proceeds to S4-8 to perform the first limit of regeneration power.

The first limit of regeneration power in S4-8, as described above with reference to Figure 4, is a regeneration control performed within a time period after a timing at which a regeneration request has been received by the motor regeneration control unit 330 of the motor control unit 300 and before a timing at which the determination of the cell states is completed after having output a request for receiving the information about the cell batteries 560 constituting the battery system 500 is output to the battery monitoring device 510 and having acquired the cell battery information from the battery monitoring device 510 a plurality of times. In the first limit of regeneration power, regeneration control is performed in which the amount of regeneration is limited to a small amount of regeneration with which the charge inhibiting voltage would not be reached, and in the present embodiment, the information about the battery system 500 has been acquired in S4-10 and by using the information, an approximate value of the regeneration power limiting amount or a regeneration current limiting value with which the voltages across terminals of the cell batteries 560 would not become overvoltage in which the charge/regeneration inhibiting voltage is reached can be set, and further, if a regeneration power limiting amount smaller than the setting value is set, limit of regeneration power can be performed in which no cell battery would cause overvoltage in which the charge/regeneration inhibiting voltage is reached. The amount of limit for the first limit of regeneration power is determined according to the information about the battery system 500 acquired in S4-10 in the above-described manner. The setting of the regeneration power limiting amount or the regeneration current limiting value with which the voltages across terminals of the cell batteries 560 would not become overvoltage in which the charge/regeneration inhibiting voltage is reached is performed when the first limit of regeneration power is performed for the first time, and the limit of regeneration power is performed on the basis of the limiting value that has been set first during a time period in which the braking request has been continued.

Note that as described above with reference to Figure 4, if the motor regeneration control unit 330 of the motor control unit 300 limits the amount of regeneration to a small amount of regeneration in the first limit of regeneration power, the requested braking cannot be implemented because the amount of regeneration requested from the higher-order vehicle controller 600 and the brake controller 710 cannot be achieved. However, since the first limit of regeneration power is a limit of regeneration power performed when a braking request has been received and in a period before the determination of the cell states, the requested braking can be implemented because the higher-order vehicle controller 600 and the brake controller 710 can set the distribution between the regeneration brake and the friction brake considering the limit of regeneration power by the first limit of regeneration power by previously transmitting the amount of regeneration performed in the first limit of regeneration power set in S4-8 to the higher-order vehicle controller 600 or the brake controller 710. Further, by performing a setting so that the regeneration current value in the first limit of regeneration power becomes constant, values of the voltage across terminals of the cell batteries 560 can be detected in the period of the first limit of regeneration power under the same current condition, which thereby enables stable detection of the cell battery states. In addition, alternatively to using the constant current value, it is possible to use a state of regeneration for the period in which the first limit of regeneration power is performed that is appropriate for detection of the states of the cell batteries 560.

After the first limit of regeneration power (S4-8) is started, a request for receiving the states of cell batteries is output (S4-3). In S4-3, the motor regeneration control unit 330 of the motor control unit 300 in Figure 1 outputs a request to the battery monitoring device 510 which monitors the state of the battery system 500 so that the states of the cell batteries 560 are transmitted. Consequently, the battery monitoring device 510 of the battery system 500 outputs information about the cell batteries 560 at the timing of receipt of the braking request, and the motor regeneration control unit 330 of the motor control unit 300 acquires the information about the cell batteries 560 (S3-4). However, depending on the transmission period of the battery monitoring device 510, the cell battery information cannot be acquired in the same control period in some cases even if a receiving request from the motor regeneration control unit 330 has been received.

After the information about the cell batteries 560 is received from the battery monitoring device 510 of the battery system 500 (or after the acquisition timing has come even when the information has not been received), the process returns to S4-2. If the braking request (S4-2) has been continued, the determination of whether the determination of the cell states (S4-5) has been completed is repeated.

In transmitting the cell battery information from the battery monitoring device 510, it is necessary to detect the states of the plurality of cell batteries included in the battery system 500, and if it takes a long time to detect the states, delay may occur until the determination of the cell states is completed. Therefore, in some cases, the period of receiving the cell battery information may be delayed in relation to the control period in which the motor regeneration control unit 330 of the motor control unit 300 performs the regeneration control. Accordingly, before the determination of the cell states in S4-5 is completed after having received the cell battery information, the motor regeneration control unit 330 of the motor control unit 300 proceeds to S4-8 to perform the first limit of regeneration power and repeat the request for receiving the cell battery information and the receiving of the cell battery information.

In the cell state determination process of S4-5, after the motor regeneration control unit 330 of the motor control unit 300 has acquired the cell battery information from the battery monitoring device 510 for a plurality of times, the states of the cell batteries 560 constituting the battery system 500 is determined on the basis of the acquired cell battery information. As described above, the cell battery information includes values of the voltages across terminals, concurrent current values, estimation for state of charge (SOC), estimation for state of health (SOH), estimation of internal resistance, and the like of the cell batteries 560, and physical quantities that denote the states of the cell batteries 560 correspond to the cell battery information. The determination of the cell states include identification of the constraint cell battery that becomes a constraint during regeneration.

After the determination of the cell states in S4-5 is completed, the process proceeds to the second limit of regeneration power (S4-9). In the second limit of regeneration power in S4-9, because the determination of the cell states has been completed in S4-5 and thus the cell battery that becomes a constraint during regeneration has been identified, an upper limit regeneration amount or an upper limit value of regeneration current for preventing the voltage of the identified cell battery from reaching the charge inhibiting voltage can be set as the regeneration power limiting amount. Accordingly, in the second limit of regeneration power, regeneration control is performed on the basis of information about the constraint cell battery acquired as a result of the completion of the determination of the cell batteries and the upper limit regeneration amount or the upper limit value of regeneration current.

As described above with reference to Figure 4, if the motor regeneration control unit 330 of the motor control unit 300 arbitrarily limits the upper limit regeneration amount or the upper limit regeneration current in the second limit of regeneration power, the requested braking cannot be implemented in some cases because the amount of regeneration requested from the higher-order vehicle controller 600 and the brake controller 710 cannot be achieved. However, since the value for the limit of regeneration power such as the upper limit regeneration amount or the upper limit value of regeneration current is set after the determination of the cell states is completed when a braking request has been received in the second limit of regeneration power, the requested braking can be implemented because the higher-order vehicle controller 600 and the brake controller 710 can set the distribution between the regeneration brake and the friction brake considering the limit of regeneration power by the second limit of regeneration power by previously transmitting the set limit of regeneration power to the higher-order vehicle controller 600 or the brake controller 710.

After the second limit of regeneration power is started, the process returns to S4-2 and repeats the determination of the braking request (S4-2) and the determination of completion of the determination of the cell states (S4-5).

In the present embodiment, by performing the above-described process, whether limit of regeneration power is necessary is determined after a braking request has been received, and it is determined that the limit of regeneration power is necessary, then the first limit of regeneration power in which the amount of regeneration, with which the charge/regeneration inhibiting voltage is not reached is limited, is securely performed, detailed information about the cell batteries 560 constituting the battery system 500 is acquired while the first limit of regeneration power is being performed, and the upper limit regeneration amount or the upper limit value of regeneration current with which the voltage of the cell battery that becomes a constraint during the regeneration would not reach the charge inhibiting voltage is set to perform the second limit of regeneration power, and thereby upper limit regeneration can be performed in which the cell battery that is likely to reach the charge inhibiting voltage and most likely to become a constraint among the cell batteries 560 constituting the battery system 500 would not reach the charge/regeneration inhibiting voltage. In the present embodiment, in particular, it is determined that limit of regeneration power is not necessary, then the regeneration control involving extra limit of regeneration power is not performed and upper limit regeneration is performed starting from the initial stage of the regeneration, and thus the amount of regeneration can be maximized.

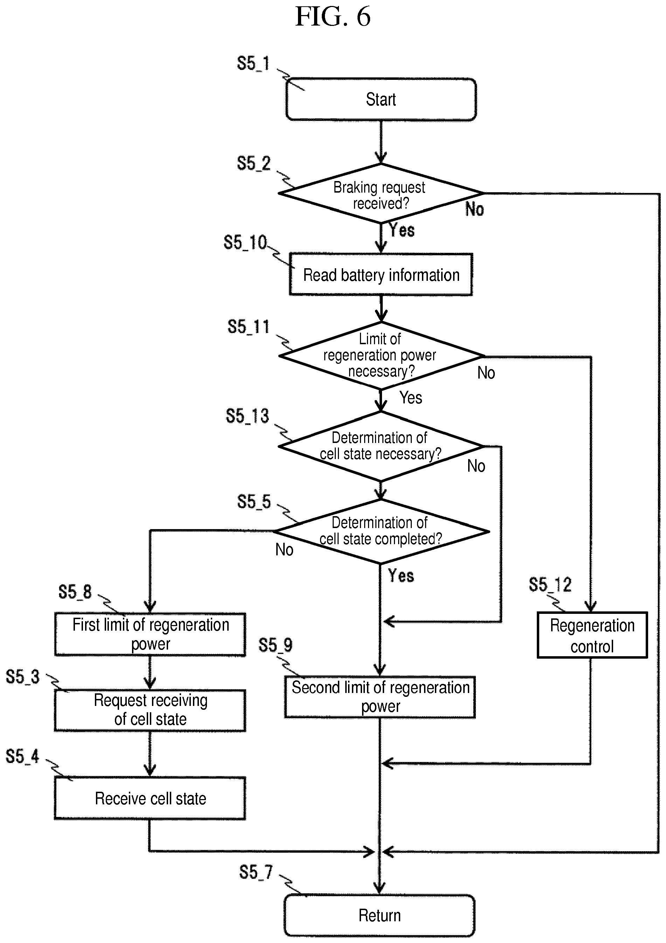

Next, Figure 6 is a flow chart which illustrates a different yet another example of the regeneration control performed by the electric power-train 100 of the present invention.

In the example illustrated in Figure 6 also, similar to Figures 2 to 5, first, the presence or absence of a braking request signal output from the vehicle controller 600 illustrated in Figure 1 is determined (S5-2). If no braking request has been received, the process proceeds to S5-7 and continues the determination on whether any braking request has been received.

If it is determined in S5-2 that a braking request signal has been received, the process proceeds to S5-10 and the information about the battery system 500 and the cell batteries 560 included therein, which has been already acquired from the battery monitoring device 510 of the battery system 500, is read from the storing means 335 of the motor regeneration control unit 330 (S5-10).

In other words, in S5-10, in order to perform the first limit of regeneration power in S5-8, the already acquired information about the battery system 500 is acquired from the motor regeneration control unit 330. The information about the battery system 500 includes information which indicates the states of the battery system 500 that has been transmitted from the battery monitoring device 510 before the braking request, such as the state of charge (SOC) of the entire battery system 500, a total voltage value of the entire battery system 500, and variation of the voltages across terminals and the internal resistances of the cell batteries 560. Based on this information, an approximate value of the regeneration power limiting amount or a regeneration current limiting value with which the voltages across terminals of the cell batteries 560 would not become overvoltage in which the charge/regeneration inhibiting voltage is reached can be set, and further, if a limit lower than the setting value is set, the limit of regeneration power can be performed in which no cell battery would cause overvoltage in which the charge/regeneration inhibiting voltage is reached. Further, in S5-10, in order to determine whether the limit of regeneration power in the subsequent step S5-11, necessary information about the battery system 500 is also read from the storing means 335 of the motor regeneration control unit 330 included in the motor control unit 300. The battery information to be read includes information such as the total voltage value, the total charged capacity, and the state of health (SOH) of the entire battery system 500, the vehicle speed value, and temperature values of parts of the battery system 500. This process is the same as that in S4-10 in Figure 5.

In S5-10, in addition to the process described above, necessary information about the battery system 500 is read from the storing means 335 for determination in S5-13 as to whether determination of the cell states is necessary. The battery information to be read is information about the states of the battery and the regeneration power limiting amount acquired and used during past limits of regeneration power. Specifically, the battery information to be read includes information acquired when a degraded cell battery that becomes a constraint during regeneration among the cell batteries 560 constituting the battery system 500 has been identified in past limits of regeneration power, such as the total voltage values and the total charged capacity of the entire battery system 500, temperature values and states of health (SOH) of parts of the battery system 500, and further, the regeneration current limiting values and regeneration power limiting amounts. This information may be information necessary for determining whether the current states of the battery system 500 and the cell batteries 560 are in a state similar to the states detected in limits of regeneration power performed before.

After the battery information has been read in S5-10, the process proceeds to S5-11.

In S5-11, it is determined whether limit of regeneration power is necessary based on the read battery information. For example, if the value of the total state of charge (SOC) of the battery system 500 is low and if it is determined that overvoltage in which the charge/regeneration inhibiting voltage would not occur in any of the cell batteries 560 constituting the battery system 500, then it is determined that it is not necessary to perform limit of regeneration power, while if the value of the state of charge (SOC) is high, it is determined that it is necessary to perform the limit of regeneration power because it is likely that overvoltage in which the charge/regeneration inhibiting voltage is reached occurs. If the temperature of the parts of the battery system 500 is low, the voltages across terminals would increase even at the same regeneration current value because the internal resistance of the cell batteries 560 constituting the battery system 500 becomes high, and therefore it is determined that overvoltage in which the charge/regeneration inhibiting voltage is reached is likely to occur and that it is necessary to perform the limit of regeneration power. On the other hand, if the temperature of the battery system 500 is normal temperature, the internal resistance is low, and it is therefore determined that overvoltage in which the charge/regeneration inhibiting voltage is reached would not occur and that it is not necessary to perform the limit of regeneration power. Further, if it is determined that the state of health (SOH) of the cell batteries 560 constituting the battery system 500 has become worse and that the battery system has been degraded, then it is determined that it is necessary to perform the limit of regeneration power because the internal resistance is high and overvoltage in which the charge/regeneration inhibiting voltage is reached is likely to occur in this case. If the vehicle speed is low, the amount of regeneration that can be regenerated becomes small, and thus it is determined that overvoltage in which the charge/regeneration inhibiting voltage is reached would not occur and that it is not necessary to perform the limit of regeneration power. As described above, whether limit of regeneration power is necessary can be determined by using the battery states and the vehicle states at a relatively latest time before the regeneration.

If it is determined in S5-11 that the limit of regeneration power is unnecessary, then the process proceeds to S5-12 and normal regeneration control is performed. On the other hand, it is determined in S5-11 that the limit of regeneration power is necessary, then the process proceeds to S5-13.

In S5-13, whether determination of the cell states is necessary is determined. The determination as to whether determination of the cell states is necessary is performed by using the information about the battery system 500 acquired in S5-10. Specifically, it is determined whether the current states of the battery system 500 and the cell batteries 560 included therein, such as the voltage, the current, the temperature, the charged capacity, and the state of health (SOH), are similar to the battery states acquired at timings of braking requests of second limit of regeneration power performed before. Alternatively to using the above-described information, any information that enables the determination as to similarity to the state of the battery system 500 or the cell batteries 560 obtained in the second limit of regeneration power performed before can be used. For example, if appropriate conditions have been satisfied, i.e., if, with respect to the temperature of the battery system 500, for example, a difference between the current and the past values is within a predetermined value, if a difference between the current and the past charged capacity values is within a predetermined value, if a difference between the current and the past total voltages is within a predetermined value, if a difference between the current degree of health denoting the state of health (SOH) and the past degree of degradation is within a predetermined value, etc., between the current value and the value obtained when the second limit of regeneration power has been performed before for each such condition, then it is determined that the current state is similar to the state in the second limit of regeneration power performed before and determination of the cell states is determined to be not necessary. In this case, as will be discussed below, the regeneration current limiting value and the regeneration power limiting amount used in the second limit of regeneration power performed before can be used as limiting values for the second limit of regeneration power to be performed in the current state.

If it is determined in S5-13 in the above-described manner that the current state of the battery system 500 is similar to the state thereof in the second limit of regeneration power performed before at the time of the braking request, then it is determined that the determination of the cell states is not necessary and the process proceeds to S5-9 for the second limit of regeneration power without performing S5-5. On the other hand, if it is determined in S5-13 that the current state of the battery system 500 is not similar to the state thereof in the second limit of regeneration power performed before, then it is determined that the determination of the cell states is necessary and the process proceeds to S5-5.

In S5-5, similarly to S4-5 described above with reference to Figure 5, states of the cell batteries 560 is determined by using the information having been acquired from the battery monitoring device 510. Similar to S4-5 in Figure 5, at a timing immediately after the braking request has been received, the information about the cell batteries 560 constituting the battery system 500 may be yet to be received from the battery monitoring device 510 in some cases and thus the determination of the cell states is usually yet to be completed in such cases, and the process therefore proceeds to S5-8. The cell battery information and the determination of the cell states performed in S5-5 are the same as those described above with reference to Figures 3 to 5.

If it is determined in S5-5 that the determination of the cell states has not been completed yet, then the process proceeds to S5-8 to perform the first limit of regeneration power.

The first limit of regeneration power in S5-8, as described above with reference to Figure 5, is a regeneration control performed within a time period after a timing at which a regeneration request has been received by the motor regeneration control unit 330 of the motor control unit 300 and before a timing at which the determination of the cell states is completed after having output a request for receiving the information about the cell batteries 560 constituting the battery system 500 is output to the battery monitoring device 510 and having acquired the cell battery information from the battery monitoring device 510 a plurality of times. In the first limit of regeneration power, regeneration control is performed in which the amount of regeneration is limited to a small amount of regeneration with which the charge inhibiting voltage would not be reached, and in the present embodiment, the information about the battery system 500 has been acquired in S5-10 and by using the information, an approximate value of the regeneration power limiting amount or a regeneration current limiting value with which the voltages across terminals of the cell batteries 560 would not become overvoltage in which the charge/regeneration inhibiting voltage is reached can be set, and further, if a regeneration power limiting amount smaller than the setting value is set, limit of regeneration power can be performed in which no cell battery would cause overvoltage in which the charge/regeneration inhibiting voltage is reached. The amount of limit for the first limit of regeneration power is determined according to the information about the battery system 500 acquired in S5-10 in the above-described manner. The setting of the regeneration power limiting amount or the regeneration current limiting value with which the voltages across terminals of the cell batteries 560 would not become overvoltage in which the charge/regeneration inhibiting voltage is reached is performed when the first limit of regeneration power is performed for the first time, and the limit of regeneration power is performed on the basis of the limiting value that has been set first during a time period in which the braking request has been continued.

Note that as described above with reference to Figure 5, if the motor regeneration control unit 330 of the motor control unit 300 limits the amount of regeneration to a small amount of regeneration in the first limit of regeneration power, the requested braking cannot be implemented because the amount of regeneration requested from the higher-order vehicle controller 600 and the brake controller 710 cannot be achieved. However, since the first limit of regeneration power is a limit of regeneration power performed when a braking request has been received and in a period before the determination of the cell states, the requested braking can be implemented because the higher-order vehicle controller 600 and the brake controller 710 can set the distribution between the regeneration brake and the friction brake considering the limit of regeneration power by the first limit of regeneration power by previously transmitting the amount of regeneration performed in the first limit of regeneration power set in S5-8 to the higher-order vehicle controller 600 or the brake controller 710. Further, by performing a setting so that the regeneration current value in the first limit of regeneration power becomes constant, values of the voltage across terminals of the cell batteries 560 can be detected in the period of the first limit of regeneration power under the same current condition, which thereby enables stable detection of the cell battery states. In addition, alternatively to using the constant current value, it is possible to use a state of regeneration for the period in which the first limit of regeneration power is performed that is appropriate for detection of the states of the cell batteries 560.

After the first limit of regeneration power (S5-8) is started, a request for receiving the states of cell batteries is output (S5-3). In S5-3, the motor regeneration control unit 330 of the motor control unit 300 in Figure 1 outputs a request to the battery monitoring device 510 which monitors the state of the battery system 500 so that the states of the cell batteries 560 are transmitted. Consequently, the battery monitoring device 510 of the battery system 500 outputs information about the cell batteries 560 at the timing of receipt of the braking request, and the motor regeneration control unit 330 of the motor control unit 300 acquires the information about the cell batteries 560 (S5-4). However, depending on the transmission period of the battery monitoring device 510, the cell battery information cannot be acquired in the same control period in some cases even if a receiving request from the motor regeneration control unit 330 has been received.

After the information about the cell batteries 560 is received from the battery monitoring device 510 of the battery system 500 (or after the acquisition timing has come even when the information has not been received), the process returns to S5-2. If the braking request (S5-2) has been continued, the determination of whether the determination of the cell states (S5-5) has been completed is repeated.

In transmitting the cell battery information from the battery monitoring device 510, it is necessary to detect the states of the plurality of cell batteries included in the battery system 500, and if it takes a long time to detect the states, delay may occur until the determination of the cell states is completed. Therefore, in some cases, the period of receiving the cell battery information may be delayed in relation to the control period in which the motor regeneration control unit 330 of the motor control unit 300 performs the regeneration control. Accordingly, before the determination of the cell states in S5-5 is completed after having received the cell battery information, the motor regeneration control unit 330 of the motor control unit 300 proceeds to S5-8 to perform the first limit of regeneration power and repeat the request for receiving the cell battery information and the receiving of the cell battery information.

In the cell state determination process of S5-5, after the motor regeneration control unit 330 of the motor control unit 300 has acquired the cell battery information from the battery monitoring device 510 for a plurality of times, the states of the cell batteries 560 constituting the battery system 500 is determined on the basis of the acquired cell battery information. As described above, the cell battery information includes values of the voltages across terminals, concurrent current values, estimation for state of charge (SOC), estimation for state of health (SOH), estimation of internal resistance, and the like of the cell batteries 560, and physical quantities that denote the states of the cell batteries 560 correspond to the cell battery information. The determination of the cell states include identification of the constraint cell battery that becomes a constraint during regeneration.

After the determination of the cell states in S5-5 is completed, the process proceeds to the second limit of regeneration power (S5-9). In the second limit of regeneration power in S5-9, because the determination of the cell states has been completed in S5-5 and thus the cell battery that becomes a constraint during regeneration has been identified, an upper limit regeneration amount or an upper limit value of regeneration current for preventing the voltage of the identified cell battery from reaching the charge inhibiting voltage can be set. Accordingly, in the second limit of regeneration power, regeneration control is performed on the basis of information about the constraint cell battery acquired as a result of the completion of the determination of the cell batteries and the upper limit regeneration amount or the upper limit value of regeneration current.

If it is determined in S5-13 that the determination of the cell states is not necessary also, the process proceeds to the second limit of regeneration power (S5-9). In this case, because it has been determined in S5-13 that the current state of the battery system 500 is similar to the state of the battery system 500 acquired when the second limit of regeneration power has been performed before, the similar regeneration current limiting value and the similar regeneration power limiting amount used in the second limit of regeneration power performed before are set as limiting values for the second limit of regeneration power to be performed in the current state.

As described above with reference to Figure 5 and the like, if the motor regeneration control unit 330 of the motor control unit 300 arbitrarily limits the upper limit regeneration amount or the upper limit regeneration current in the second limit of regeneration power, the requested braking cannot be implemented in some cases because the amount of regeneration requested from the higher-order vehicle controller 600 and the brake controller 710 cannot be achieved. However, since the value for the limit of regeneration power such as the upper limit regeneration amount or the upper limit value of regeneration current is set after the determination of the cell states is completed when a braking request has been received in the second limit of regeneration power, the requested braking can be implemented because the higher-order vehicle controller 600 and the brake controller 710 can set the distribution between the regeneration brake and the friction brake considering the limit of regeneration power by the second limit of regeneration power by previously transmitting the set limit of regeneration power to the higher-order vehicle controller 600 or the brake controller 710.

After the second limit of regeneration power is started, the process returns to S5-2 and repeats the determination of the braking request (S5-2) and the determination of completion of the determination of the cell states (S5-5).

In the present embodiment, by performing the above-described process, whether limit of regeneration power is necessary is determined after a braking request has been received, and it is determined that the limit of regeneration power is necessary, then the first limit of regeneration power in which the amount of regeneration, with which the charge/regeneration inhibiting voltage is not reached is limited, is securely performed, detailed information about the cell batteries 560 constituting the battery system 500 is acquired while the first limit of regeneration power is being performed, and the upper limit regeneration amount or the upper limit value of regeneration current with which the voltage of the cell battery that becomes a constraint during the regeneration would not reach the charge inhibiting voltage is set to perform the second limit of regeneration power, and thereby upper limit regeneration can be performed in which the worst cell battery that is likely to reach the charge inhibiting voltage among the cell batteries 560 constituting the battery system 500 would not reach the charge/regeneration inhibiting voltage. In the present embodiment, in particular, it is determined that limit of regeneration power is not necessary, then the regeneration control involving extra limit of regeneration power is not performed and upper limit regeneration is performed starting from the initial stage of the regeneration, and thus the amount of regeneration can be maximized. Further, if the current states of the battery system 500 and the cell batteries 560 are similar to the state in the second limit of regeneration power performed before, the second limit of regeneration power with the large amount of regeneration can be immediately performed without requesting a new regeneration power limiting amount for performing limitation in the second limit of regeneration power and without performing the first limit of regeneration power with a small amount of regeneration, and thus a larger amount of regeneration can be secured.

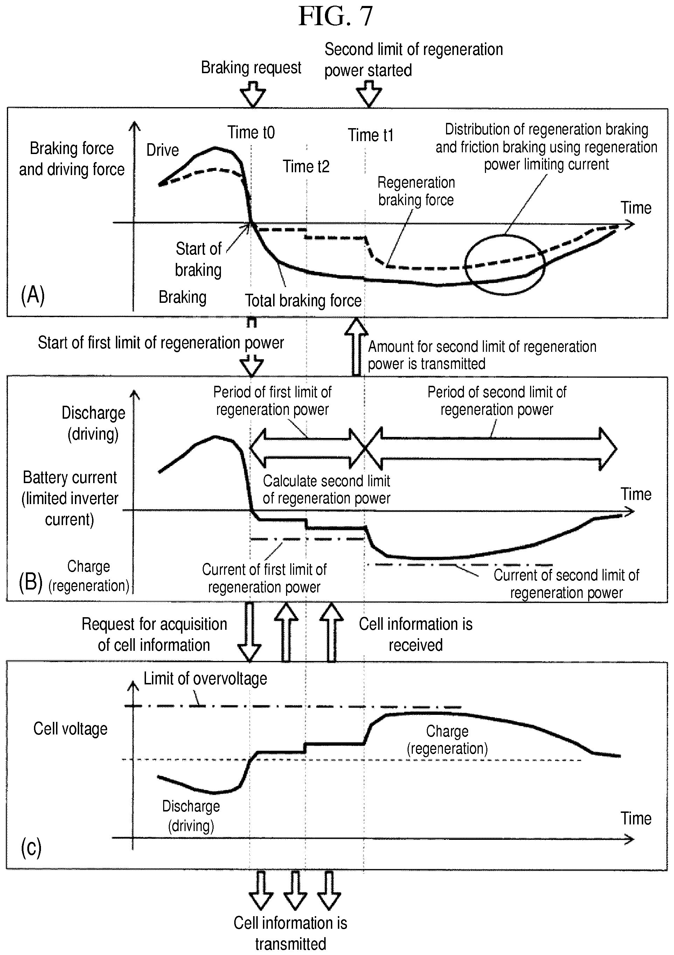

Figure 7 is an explanatory drawing which illustrates variation of various parameters during regeneration control in examples illustrated in Figures 3 to 6 in series of time of transmitting and receiving of data.

Referring to Figure 7, Figure 7(A) in the upper portion thereof illustrates the braking force and the driving force of the vehicle, and a solid line denotes target values for the total braking force and the driving force calculated by the vehicle controller 600 and a broken line denotes target values for the braking force and the driving force from the motor 200 and the inverter 400. In Figure 7(B) in the middle portion, current values of the battery system 500 are illustrated. In Figure 7(C) in the lower portion, voltages across terminals of the cell batteries 560 are illustrated, and in particular, voltages across terminals of the constraint cell battery that is most likely to reach the charge/regeneration inhibiting voltage among the multiple cell batteries 560 constituting the battery system 500 are illustrated. Transmission and receiving of various information are illustrated by arrows illustrated between and outside Figures 7(A), 7(B), and 7(C).

In the example illustrated in Figure 7, a braking request is output at time t0. As will be described below, the braking request is determined by the vehicle controller 600 according to the driver's operations on the accelerator and the brake, and target values for the total braking force and the driving force are calculated according to the magnitude of the driver's operations on the accelerator and the brake and the vehicle speed.

In Figure 7(A) in the upper portion of Figure 7, time is taken on the horizontal axis, and the driving force is taken on the positive side of the vertical axis while the braking force is taken on its negative side. Before the time t0, target values for the total driving force are calculated according to the driver's operation on the accelerator and the vehicle speed, while at the same time, target values for the driving force for the electric power-train 100 constituted by the motor 200, the inverter 400, and the battery system 500 are calculated. The target values for the total driving force are illustrated by the solid line and the target values for the driving force for the electric power-train 100 are illustrated by the broken line, and both target values are identical before the time t0. At the time t0, the request is switched by the driver's operation from the driving force request to the braking force request. When the braking request is received at the time t0, the braking is started and the first limit of regeneration power is started first. As described above, in the first limit of regeneration power, the amount of regeneration is limited to a small amount of regeneration with which the cell batteries constituting the battery system 500 would not reach the charge/regeneration inhibiting voltage. For example, in Figure 7(A) in the upper portion of Figure 7, the target value for the total braking force indicated by the solid line has greatly changed from that at the time t0, while the target value for the braking force generated by the regeneration by the electric power-train system 100 indicated by the broken line has been adjusted according to the limit of regeneration power, differently from the case of the target value for the total braking force.

In Figure 7(B) in the middle portion of Figure 7, time is taken on the horizontal axis, and battery discharge current values are illustrated on the positive side of the vertical axis while battery charge current values are illustrated on its negative side. Before the time t0, in correspondence with the target value for the driving force for the electric power-train system 100, which is the same target value for the total driving force illustrated in Figure 7(A) in the upper portion of Figure 7, a current for achieving the driving force (discharge current) is output from the battery system 500. After the braking request has been transmitted at the time t0 and the first limit of regeneration power has been started, the regeneration control is performed so that the regeneration current becomes a current with an absolute value smaller than the regeneration current limiting value for the first limit of regeneration power (alternate long and short dashed line), as is illustrated in Figure 7(B) in the middle portion of Figure 7 with the solid line.

In Figure 7(C) in the lower portion of Figure 7, time is taken on the horizontal axis, and values of the voltage of the cell batteries 560 constituting the battery system 500 are taken on the vertical axis. In particular, the values on the vertical axis denote values of the voltages across terminals of the constraint cell battery with a highest voltage and which is likely to cause overvoltage in which the charge/regeneration inhibiting voltage is reached among the cell batteries 560 constituting the battery system 500. Before the time t0, the current for achieving the driving force is output from the battery system 500 illustrated in Figure 7(B) in the middle portion of Figure 7 in correspondence with the target value for the driving force for the electric power-train system 100 that is the same as the target value for total driving force illustrated in Figure 7(A) in the upper portion of Figure 7, and the voltages across terminals of the cell batteries 560 constituting the battery system 500 therefore drops by an amount equivalent to the voltage drop from the open circuit voltage occurring in response to the output of the current, and thus the voltage varies in accordance with the level of the current output from the battery system 500. After the braking request has been transmitted at the time t0 and the first limit of regeneration power has been started, regeneration control involving the limit of regeneration power is performed as illustrated in Figure 7(B) in the middle portion of Figure 7 by the solid line, and thus the voltages across terminals of the cell batteries 560 constituting the battery system 500 rises in accordance with the regeneration current input to the battery system 500. At the time t0, the braking request is transmitted and the first limit of regeneration power is started according to the braking request, and at the timing of the first limit of regeneration power, the motor control unit 300 transmits a request for transmitting the battery information and the cell battery information about the battery system 500, such as voltages across terminals and currents of the cell batteries 560 constituting the battery system 500 (i.e., issues a cell battery information acquisition request) to the battery monitoring device 510. The battery monitoring device 510 transmits to the motor control unit 300 the information about the cell batteries 560 constituting the battery system 500 and the information about the entire battery system in response to the cell battery information acquisition request from the motor control unit 300.

After the time t0, the regeneration control is performed at or below the regeneration current limit for the first limit of regeneration power, which is illustrated in Figure 7(B) in the middle portion of Figure 7. While the first limit of regeneration power is being performed, the motor control unit 300 gives a request to the battery monitoring device 510 for acquisition of the battery information and the cell battery information to receive the battery information and the cell battery information from the battery monitoring device 510. After having acquired the battery information and the cell battery information for a plurality of times, a cell battery 560 that is likely to cause overvoltage in which the charge/regeneration inhibiting voltage is reached is identified from among the cell batteries 560 constituting the battery system 500, and based on the voltages across terminals, the battery information, and the like of the identified cell battery that have been acquired for a plurality of times, the upper limit regeneration amount and the upper limit value of regeneration current (the regeneration current limit for the second limit of regeneration power) with which the identified cell battery (degraded cell battery) that is likely to cause overvoltage in which the charge/regeneration inhibiting voltage is reached would not reach the charge/regeneration inhibiting voltage are calculated.

After upper limit regeneration amount and the upper limit value of regeneration current (the regeneration current limit for the second limit of regeneration power) with which the identified degraded cell battery would not cause overvoltage in which the charge/regeneration inhibiting voltage is reached have been calculated, it is determined that the determination of the cell states has been completed, and the process proceeds from the first limit of regeneration power to the second limit of regeneration power. In Figure 7, the process proceeds from the first limit of regeneration power to the second limit of regeneration power at the time t1. In the second limit of regeneration power, the limit of regeneration power is performed so that the current becomes the regeneration current limit for the second limit of regeneration power.

After the degraded cell battery 560 has been identified and the regeneration current limit for the second limit of regeneration power corresponding thereto has been calculated, the value of the regeneration current limit for the second limit of regeneration power is transmitted to the vehicle controller 600. Thus, the vehicle controller 600 acquires the upper limit value at which the electric power-train system 100 can perform the regeneration. Consequently, in the period of the second limit of regeneration power, distribution between the regeneration brake and the friction brake is determined so that regeneration control is performed at the regeneration current limit for the second limit of regeneration power or below and the second limit of regeneration power is performed according to the distribution.

In Figure 7, the regeneration control by the first limit of regeneration power is performed in the period from the time t0 to t1, the battery information and the cell battery information are acquired from the battery monitoring device 510 of the battery system 500 and the states of the cell batteries 560 constituting the battery system 500 are determined in this period, and a specific example of the determination of the states of the cell batteries 560 performed in this period will be described below.

In the period from the time t0 and the time t1 in which the first limit of regeneration power is performed, the regeneration control is performed at the regeneration current limit for the first limit of regeneration power or below, at which none of the cell batteries 560 constituting the battery system 500 would reach the charge inhibiting voltage. In the example illustrated in Figure 7, the period of the first limit of regeneration power from the time t0 to t1 is further divided into two periods, and a constant current is set as the regeneration current for the period from the time t0 to time t2 while a different constant current is set as the regeneration current for the period from the time t2 to the time t1.

Assuming that the regeneration current value for the period from the time t0 to the time t2 be Ib1, the voltage across terminals (Vb_ci) of the cell battery 560 that has been acquired during this period can be expressed by the following expression [1].

$$Vb\_ci[k]$$

$$= Eb\_ci[k] + Rb\_ci[k] \times Ib1[k] \qquad [1]$$

where

Vb_ci[k]: voltage across terminals (closed circuit voltage (CCV) of an i-th cell battery at time k
Eb_ci[k]: open circuit voltage (OCV) of an i-th cell battery at the time k
Rb_ci[k]: internal resistance of an i-th cell battery at the time k
Ib1[k]: battery current at the time k

If the regeneration current between the period of the time t0 to the time t2 is constant, the voltage across terminals of the cell battery 560 becomes substantially constant, and the constant voltage is advantageous in detecting the voltage across terminals of the cell battery 560 at high accuracy. Specifically, even if detection values of the voltage of the cell battery 560 have been varied, the voltage across terminals can be detected at high accuracy by detecting and using an average value thereof.

Next, assuming that the regeneration current value for the period from the time t2 to the time t1 be Ib2, the voltage across terminals (Vb_ci) of the cell battery 560 that has been acquired during this period can be expressed by the following expression [2].

$$Vb\_ci[j]$$
$$= Eb\_ci[j] + Rb\_ci[j] \times Ib2[j] \qquad [2]$$

where

Vb_ci[j]: voltage across terminals (closed circuit voltage (CCV) of an i-th cell battery at time j
Eb_ci[j]: open circuit voltage (OCV) of an i-th cell battery at the time j
Rb_ci[j]: internal resistance of an i-th cell battery at the time j
Ib1 [j]: battery current at the time j

The period from the time t0 to the time t1 is a short period of time of several hundred msecs to 1 second, for example, and therefore it can be supposed that the state of charge (SOC), the temperature, the state of health (SOH), and the like are the same for the period from the time t0 to the time t2 and the period from the time t2 to the time t1. Accordingly, the relationship expressed by the following expressions [3] and [4] holds.

$$Eb\_ci[k] = Eb\_ci[j] \qquad [3]$$

$$Rb\_ci[k] = Rb\_ci[j] \qquad [4]$$

Therefore, the relationship expressed by the following expression [5] holds from the expressions [1] to [4].

$$Vb\_ci[k] - Vb\_ci[j]$$
$$= Rb\_ci \times (Ib1[k] - Ib2[j]) \qquad [5]$$

where
Rb_ci = Rb_ci[k] = Rb_ci[j]
From the expression [5], the internal resistance (Rb_ci) and the open circuit voltage (OCV) (Eb_ci) of the cell batteries 560 are calculated by the following expressions [6] and [7].

$$Rb\_ci$$

$$= (Vb\_ci[k] - Vb\_ci[j])$$

$$/(Ib1[k] - Ib2[j]) \qquad\qquad [6]$$

$$Eb\_ci$$

$$= Vb\_ci[k] - (Vb\_ci[k] - Vb\_ci[j])$$

$$/(Ib1[k] - Ib2[j]) \times Ib2 \qquad\qquad [7]$$

where

$$Eb\_ci = Eb\_ci[k] = Eb\_ci[j]$$

As described above, by detecting and using the voltages across terminals and the battery current values of the cell batteries 560 at two different regeneration currents for the period from the time t0 to the time t2 and the period from the time t2 to the time t1, the internal resistance and the open circuit voltage (OCV) of the cell batteries 560 in the current states can be estimated at high accuracy.

Further, assuming that the regeneration inhibiting voltage be Vb_cmax, the upper limit value of regeneration current (Ibmax_i) at which the cell batteries 560 reach the regeneration inhibiting voltage can be calculated by the following expression.

$$Ibmax\_i$$

$$= (Vb\_cmax - Vb\_ci[j])/Rb\_ci + Ib2$$

$$= (Vb\_cmax - Vb\_ci[j])$$

$$\times (Ib1[k] - Ib2[j])$$

$$/(Vb\_ci[k] - Vb\_ci[j]) + Ib2 \qquad\qquad [8]$$

From the expression [8], after calculating the respective upper limit values of regeneration current (Ibmax_i) of the cell batteries 560 constituting the battery system 500, a lowest upper limit value of regeneration current among the calculated values is set as the upper limit value of regeneration current for the battery system 500. The cell battery 560 that has become a constraint is identified as a worst cell battery.

By performing the above-described process, identification of the worst cell battery and the calculation for the upper limit value of regeneration current can be performed in the period of the first limit of regeneration power, and thereby an upper limit value of regeneration current for the period of the second limit of regeneration power at and after the time t1 can be set.

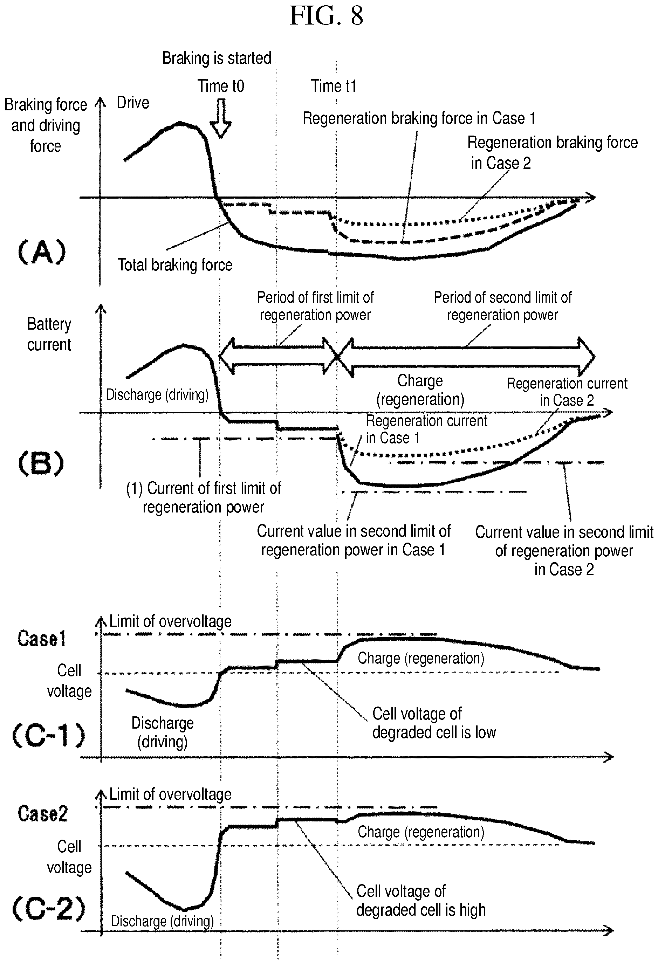

Figure 8 illustrates difference of the period of the second limit of regeneration power in cases of different states of the cell batteries 560 constituting the battery system 500 (in particular, cases of different states of the degraded cell battery).

Similar to Figure 7(A) of Figure 7, Figure 8(A) illustrates target values for the total braking force and the driving force calculated by the vehicle controller 600 and target values for the braking force and the driving force for the motor 200 and the inverter 400. The solid line denotes the target values for the total braking force and the driving force determined by the vehicle controller 600. The broken line indicates the target values for the braking force and the driving force for the motor 200 and the inverter 400 in Case 1 of the cell battery state, which is illustrated in Figure 8(C-1). The dotted line indicates the target values for the braking force and the driving force for the motor 200 and the inverter 400 in Case 2 of the cell battery state, which is illustrated in Figure 8(C-2).

As will be described below, Case 1 and Case 2 are different in a point that the degraded cell battery among the cell batteries 560 constituting the battery system 500 is different. Compared with Case 1, the voltages across terminals of the degraded cell battery during the period of the first limit of regeneration power is higher for Case 2.

Similar to Figure 7(B), Figure 8(B) of illustrates current values of the battery system 500. The solid line indicates values of Case 1 of the cell battery state, while the broken line indicates values of Case 2 of the cell battery state.

Similar to Figure 7(C), portions Figure 8(C-1) and Figure 8(C-2) illustrate voltages across terminals of a constraint cell battery. Figures 8(C-1) and (C-2) illustrate voltages across terminals in Case 1 of the cell battery state and voltages across terminals in Case 2 of the cell battery state, respectively, and the voltages across terminals in both cases are voltages across terminals of the worst cell battery that is likely to reach the charge/regeneration inhibiting voltage among the cell batteries 560 constituting the battery system 500.

Similar to Figure 7, in Figure 8, at the time t0, the braking request determined by the vehicle controller 600 in response to the driver's operations on the accelerator and the brake is output, and the target value for the total braking force and the driving force is calculated according to the magnitude of the driver's operations on the accelerator and the brake and the vehicle speed is calculated.

In Figure 8(A), time is taken on the horizontal axis, and the driving force is taken on the positive side of the vertical axis while the braking force is taken on its negative side. Before the time t0, target values for the total driving force are calculated according to the driver's operation on the accelerator and the vehicle speed, while at the same time, target values for the driving force for the electric power-train 100 are calculated. The target values for the total driving force are illustrated by the solid line and the target values for the driving force for the electric power-train 100 are illustrated by the broken line, and both target values are identical before the time t0. At the time t0, the request is switched by the driver's operation from the driving force request to the braking force request. When the braking request is received at the time t0, the braking is started and the first limit of regeneration power is started first. As described above, in the first limit of regeneration power, the amount of regeneration is limited to a small amount of regeneration with which the cell batteries constituting the battery system 500 would not reach the charge/regeneration inhibiting voltage. In Figure 8(A), the target value for the total braking force indicated by the solid line has greatly changed from that at the time t0, while the target value for the braking force generated by the regeneration by the electric power-train system 100 indicated by the broken line has been adjusted according to the limit of regeneration power, differently from the case of the target value for the total braking force.

In Figure 8(B), time is taken on the horizontal axis, and battery discharge current values are illustrated on the positive side of the vertical axis while battery charge current values are illustrated on its negative side. Before the time t0, in correspondence with the target value for the driving force for the electric power-train system 100, which is the same target value for the total driving force illustrated in Figure 8(A), a current for achieving the driving force (discharge current) is output from the battery system 500. After the braking request has been transmitted at the time t0 and the first limit of regeneration power has been started, the regeneration control is performed so that the regeneration current becomes a current with an absolute value smaller than the regeneration current limiting value for the first limit of regeneration power (alternate long and short dashed line), as is illustrated in Figure 8(B) with the solid line.

Figures 8(C-1) and (C-2), time is taken on the horizontal axis, and values of voltages across terminals of the cell batteries 560 constituting the battery system 500 are taken on the vertical axis. In particular, the values on the vertical axis denote values of the voltages across terminals of the worst cell battery with a highest voltage and which is likely to cause overvoltage in which the charge/regeneration inhibiting voltage is reached among the cell batteries 560 constituting the battery system 500. Before the time t0, the current for achieving the driving force is output from the battery system 500 as illustrated in Figure 8(B) in correspondence with the target value for the driving force for the electric power-train system 100 that is the same as the target value for total driving force illustrated in Figure 8(A), and the voltages across terminals of the cell batteries 560 constituting the battery system 500 therefore drops by an amount equivalent to the voltage drop from the open circuit voltage occurring in response to the output of the current, and thus the voltage varies in accordance with the level of the current output from the battery system 500. To comparison the voltages of the cell battery before the time t0 illustrated in the Figures 8(C-1) and (C-2), Case 1 and Case 2 are different in a point that the cell battery voltage illustrated in Figure 8(C-1) has a value higher than the cell battery voltage illustrated in Figure 8(C-2).

The voltage across terminals of the cell battery 560 is determined depending on the open circuit voltage (OCV) of the cell battery, the output current, and the voltage drop occurring in relation to the internal resistance of the cell battery. The two examples in Figure 8 illustrate cases where the open circuit voltages of the cell battery are the same as each other but the internal resistance is higher for the cell battery in Case 2, i.e., in Figure 8(C-2). The increase of the internal resistance of the cell battery is caused due to factors such as a low temperature state or a degraded state thereof. As described above, because the internal resistance of the cell battery is high in Case 2, the voltage drop occurring due to the internal resistance and the current becomes great during driving, and the voltage across terminals of the cell battery becomes lower compared with Case 1.

After the braking request has been transmitted at the time t0 and the first limit of regeneration power has been started, regeneration control is performed as illustrated in Figure 8(B) by the solid line so that the current becomes the regeneration current with an absolute value smaller than the regeneration current limiting value for the first limit of regeneration power (alternate long and short dashed line), and during the regeneration control, the voltages across terminals of the cell batteries 560 constituting the battery system 500 rise according to the current input to the battery system 500.

As illustrated in Figure 8(C-1) and (C-2), the voltage of the cell battery varies differently in Case 1 and Case 2 during the period of the first limit of regeneration power. This is because the voltage of the degraded cell battery in Case 2, in which the internal resistance is higher, becomes higher than that in Case 1 because the internal resistance of the cell battery has different values for the cases as described above. For both cases illustrated in the Figures 8(C-1) and (C-2), the regeneration current limiting value for the first limit of regeneration power is set so that the voltages across terminals of the cell batteries 560 constituting the battery system 500 would not reach the regeneration inhibiting voltage, and overvoltage in which the charge/regeneration inhibiting voltage is reached therefore would not be caused during the period of the first limit of regeneration power in both cases.

As described above with reference to Figure 7, after the states of the cell batteries 560 constituting the battery system 500 have been determined during the period of the first limit of regeneration power and the calculation of the upper limit value of regeneration current at which the worst cell battery among such cell batteries would not reach the regeneration inhibiting voltage is completed (time t1), the process proceeds to the second limit of regeneration power. The second limit of regeneration power is different between Case 1 and Case 2 in the examples illustrated in Figure 8. Specifically, as mentioned above, because the internal resistance of the worst cell battery is higher in Case 2 than that in Case 1, the regeneration current value at which overvoltage in which the charge/regeneration inhibiting voltage is reached becomes low. This can be determined in the period of the first limit of regeneration power from the information about the battery and the information about the cell batteries 560 having been acquired from the battery monitoring device 510 of the battery system 500. Consequently, as illustrated in Figure 8(B), the absolute value of the regeneration current limiting value for the second limit of regeneration power in Case 1 becomes greater than that of the regeneration current limiting value for the second limit of regeneration power in Case 2, and thus the amount of regeneration in Case 1 in the second limit of regeneration power becomes larger than the amount of regeneration in Case 2.

By applying the present invention as described above, the upper limit regeneration amount in the second limit of regeneration power is limited to a smaller value or the absolute value of the upper limit of regeneration current is limited to a smaller value as the voltages across terminals of the cell batteries 560 detected in the first limit of regeneration power become greater.

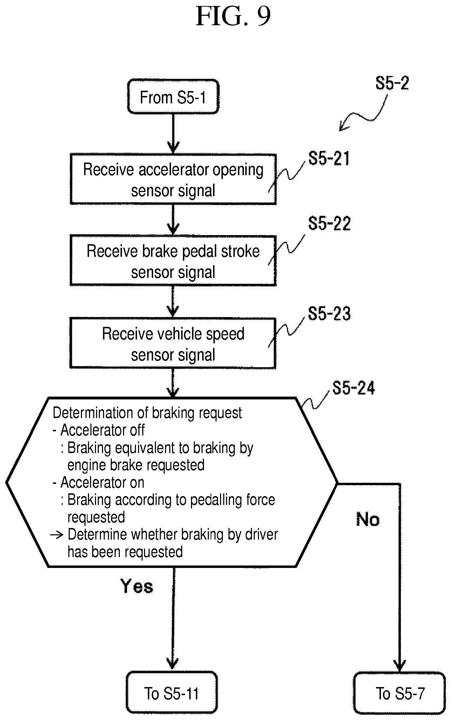

Figure 9 illustrates a flow chart of braking request determination, which is a part of the regeneration control of the present invention. In particular, Figure 9 illustrates a flow chart corresponding to the process in S5-2 in Figure 6. For the process of a braking request signal, first, an accelerator opening sensor signal is received (S5-21). In addition, a brake pedal stroke sensor signal is received (S5-22). Further, a vehicle speed sensor signal is received (S5-23). The braking request determination process is performed based on these sensor signals (S5-24). For the braking request determination, the process includes a case where if an accelerator opening sensor signal has been received which indicates that the accelerator opening sensor has been operated off, then it is determined that a request for braking force equivalent to that by an engine brake generated in a vehicle with a conventional engine has been received, for example. In addition, the process includes a case where if a brake pedal stroke sensor signal has been received which indicates that the brake pedal has been depressed, then it is determined that a request for braking force according to the force of depressing the brake pedal (pedal force) has been received. The determination of the braking force request is performed according to the accelerator opening sensor signal and the brake pedal stroke sensor signal described above. In this process, target braking force is set by using a signal from the vehicle speed sensor in addition to the accelerator opening sensor signal and the brake pedal stroke sensor signal.

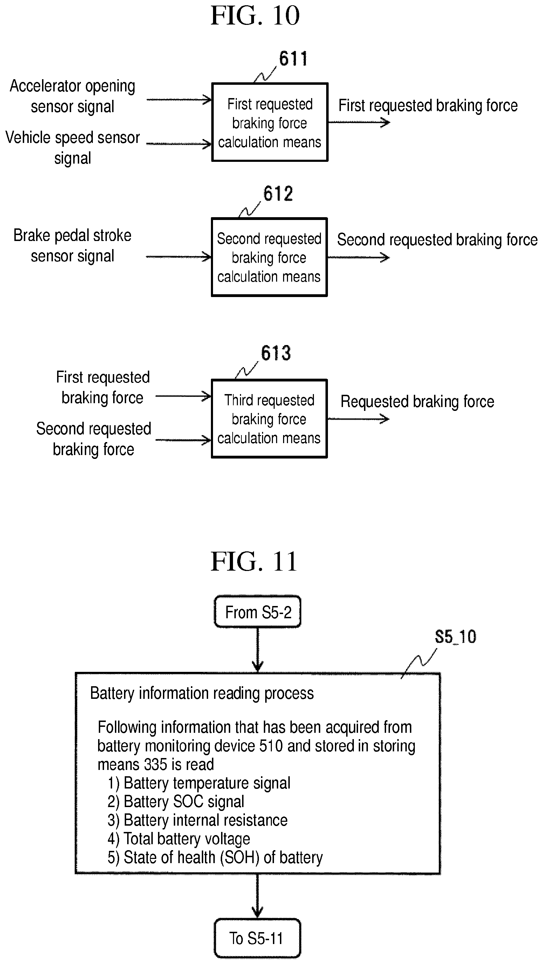

Figure 10 illustrates an example of a block diagram of a calculation of required braking force performed by the electric power-train system of the present invention. For the requested braking force, a first requested braking force calculation means 611 calculates first requested braking force from the accelerator opening sensor signal and the vehicle speed sensor signal. The first requested braking force is to become braking force equivalent to that by an engine brake generated in a vehicle with a conventional engine. For the first requested braking force calculation means 611, a method can be used, for example, in which braking force corresponding to the vehicle speed when the accelerator is operated is stored in a table. In addition, second braking force calculation means 612 calculates second requested braking force from the brake pedal stroke sensor signal. In this calculation, the braking force corresponding to driver's operation on the brake pedal is calculated, and this calculation is implemented, for example, by a method in which the braking force is calculated by using brake pedal force as an input of the brake pedal stroke sensor signal. Third requested braking force calculation means 613 calculates final requested braking force based on the first requested braking force and the second requested braking force. Example of this calculation includes a method such as a method in which requested braking force that is the larger of the first requested braking force and the second requested braking force is output as the last requested braking force.

Figure 11 illustrates details of the process in S5-10 of Figure 6. After performing the determination of braking force request in S5-2 described in detail in Figure 9, a battery information reading process is performed in S5-10. The battery information reading process is a process in which the information about the battery system 500 having been acquired from the battery monitoring device 510 and stored in the storing means 335 of the motor regeneration control unit 330 is read. The information read in this process includes three types of information, such as (A) information for determining whether limit of regeneration power is necessary, (B) information for determining whether cell state determination is necessary, and (C) information for determining the regeneration power limiting amount for the first limit of regeneration power.

The determination about whether limit of regeneration power is necessary in (A) is a determination about whether the voltages across terminals of the cell batteries 560 would apparently not reach the regeneration inhibiting voltage due to the regeneration based on outline information. Accordingly, the total voltage, the temperature, the state of charge (SOC), and the state of health (SOH) of the entire battery system 500, for example, is information necessary for the process.

The determination as to whether cell state determination is necessary in the above item (B) is a determination performed, if any history of the second limit of regeneration power having been performed before or in a latest occasion, as to whether the second limit of regeneration power used therein is available for the current state of the battery system 500. Accordingly, information such as the total voltage, the temperature, the state of charge (SOC), the state of health (SOH), as well as estimation for internal resistance and time elapsed since the last second limit of regeneration power of the entire battery system 500, is information necessary for the process.

Further, the information to be read in S5-10 includes the information for determining the regeneration power limiting amount for the first limit of regeneration power mentioned in the above item (C). The information necessary for this process includes information such as the total voltage, the temperature, the state of charge (SOC), and the internal resistance of the entire battery system the battery system 500.

The temperature of the battery system 500 includes a temperature included in a battery temperature signal detected by various temperature sensors 540 installed in the battery system 500. The total state of charge (SOC) of the battery system 500 includes a signal of the state of charge (SOC) of the entire battery system calculated by the battery monitoring device 510, and the internal resistance of the entire battery system 500 includes an average value of the internal resistance of the entire battery system 500 calculated by the battery monitoring device 510, the total voltage of the entire battery system 500 includes the total voltage value of the entire battery system 500 detected by the battery monitoring device 510, and the state of health (SOH) of the battery system 500 includes the state of health (SOH) of the battery system 500 calculated by the battery monitoring device 510. These pieces of information indicate the states of the entire battery system 500, and in the next step, whether limit of regeneration power can be performed is determined by using these pieces of information.

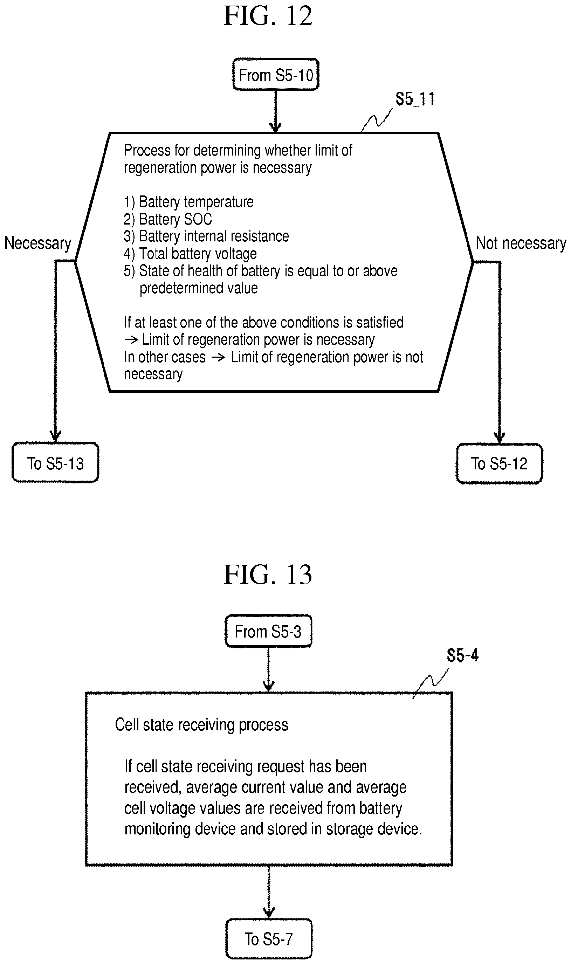

Figure 12 illustrates details of the process in S5-11, which is a part of the regeneration control illustrated in Figure 6. In S5-11, a process for determining whether regeneration control is necessary, in which whether to perform limit of regeneration power is determined, is performed based on the information about the battery system 500. For example, in this determination process, whether any of the following conditions holds is determined based on the battery information acquired in S5-10.

1) The battery temperature is equal to or below a predetermined value. Specifically, "battery temperature < BAT_Temp_limit" (BAT_Temp_limit is a setting value).
2) The battery state of charge (SOC) is equal to or higher than a predetermined value. Specifically, "SOC > BAT_SCO_limit" (BAT_SCO_limit is a setting value).
3) The battery internal resistance is equal to or higher than a predetermined value. Specifically, the "battery internal resistance > BAT_R_limit" (BAT_R_limit is a setting value).
4) The battery total voltage is equal to or higher than a predetermined value. Specifically, the "battery total voltage > Vall_max" (Vall_max is a setting value).
5) The battery state of health (SOH) is equal to or higher than a predetermined value. Specifically, "SOH > BAT_SOH_Limit" (BAT_SOH_Limit is a setting value).

If any one of the five conditions described above holds, it is determined that limit of regeneration power is necessary, while none of them holds, it is determined that limit of regeneration power is not necessary.

Figure 13 illustrates details of the process in S5-4, which is a part of the regeneration control illustrated in Figure 6. S5-4 is a cell state receiving process, in which the motor control unit 300 gives a request for transmitting the information about the cell batteries 560 constituting the battery system 500 and receives a result thereof. In the cell state receiving process, the average current value of the cell batteries 560 and the average voltage value of the cell batteries 560 having been transmitted from the battery monitoring device 510 are received and stored in the storing means 335. The term "average" herein refers to an average of values obtained by a plurality of times of samplings performed for the cell batteries 560 (e.g., moving average, weighted mean, or the like).

**EP 2 907 686 B1**

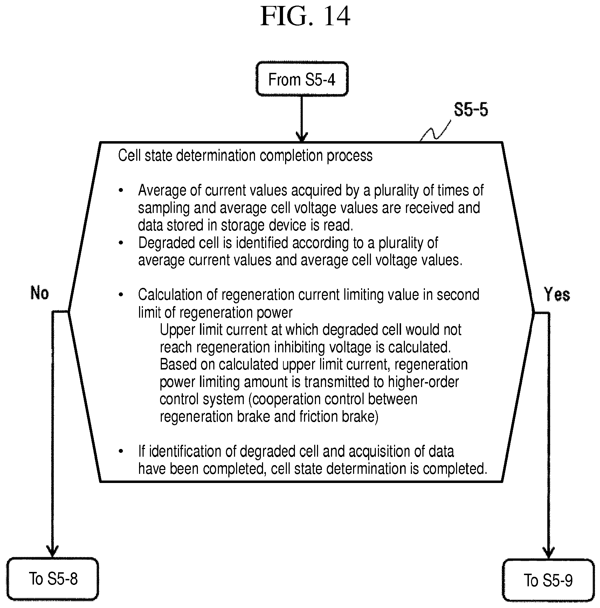

Figure 14 illustrates details of the process in S5-5, which is a part of the regeneration control illustrated in Figure 6. In S5-5, a cell state determination completion process is performed, in which cell states are determined by using the average current value and the average value of voltages across terminals of the cell batteries 560 acquired in S5-4 in the previous control period, and information indicating the completion of the determination is output. Note that in this process, the battery state is determined by using the average current value and the average value of voltages across terminals of the cell batteries 560 constituting the battery system 500, and because it is generally difficult to determine cell battery states in the same operation states at high accuracy, average current values and average values of voltage across terminals of the cell batteries 560 in two or more different operation states are acquired from the storing means 335. The degraded cell battery is identified from among the multiple cell batteries 560 constituting the battery system 500 by performing the processes based on the above expressions [1] to [8], and the upper limit value of regeneration current for the second limit of regeneration power is calculated. The calculated upper limit value of regeneration current is transmitted to the vehicle controller 600 that is a higher-order controller or the brake controller 710 as a regeneration power limiting amount. At a stage at which the above-described series of processes have been completed, it is determined that the cell state determination has been completed, and then the process proceeds to S5-9. If the amount of data of the average current value and the average value of voltages across terminals of the cell batteries 560 acquired in S5-4 is not sufficient for determining the cell states, it is determined that the determination of the cell states has not been completed, and the process proceeds to S5-8.

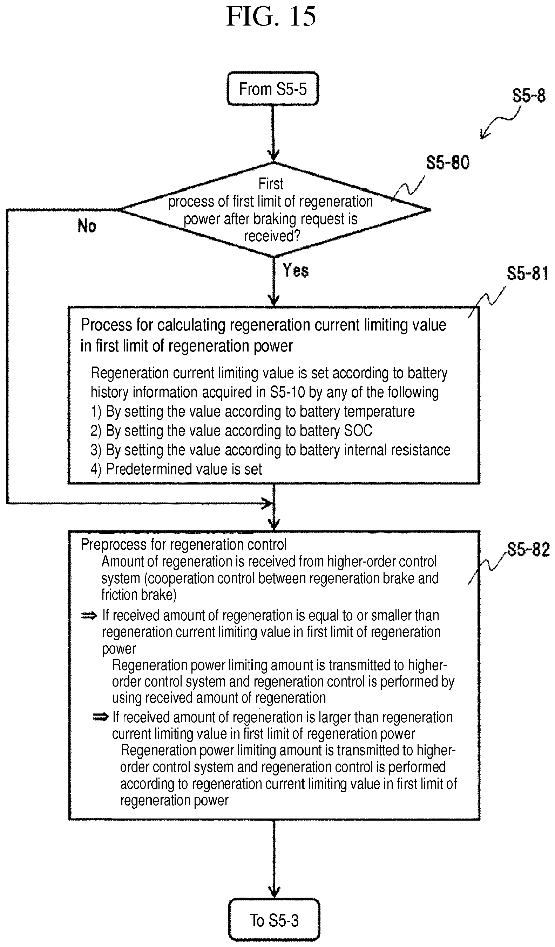

Figure 15 illustrates details of the process in S5-8, which is a part of the regeneration control illustrated in Figure 6. In S5-8, process related to the first limit of regeneration power is performed. In S5-80, it is determined whether the process is a first process of the first limit of regeneration power after the braking request. If the process is a first process of the first limit of regeneration power, the process proceeds to S5-81. In S5-81, a process for calculating a regeneration current limiting value for the first limit of regeneration power is performed. In this process, the regeneration current limiting value is set from the battery information acquired in S5-10 by any one of the following methods.

1) By performing setting according to the battery temperature. For example, by using signals from the temperature sensor 540 installed to the battery system 500 as inputs, the regeneration current limiting values are stored in a table, and thereby the regeneration current limiting value is set according to the signals from the temperature sensors 540. In this case, the regeneration current limiting value is decreased as the temperature is lower, for example.

2) By performing the setting according to the battery SOC. For example, by using the states of charge (SOCs) of the battery system 500 as inputs, the regeneration current limiting values are stored in a table, and the regeneration current limiting value is set according to an average charged capacity. In this case, the regeneration current limiting value is decreased as the charged capacity is larger, for example.

3) By performing the setting according to the battery internal resistance. For example, by using the average internal resistance values of the cell batteries 560 constituting the battery system 500 as inputs, the regeneration current limiting values are stored in a table, and thereby the regeneration current limiting value is set according to the average internal resistance value. In this case, the regeneration current limiting value is decreased as the internal resistance value is larger, for example.

4) By setting a predetermined value. Specifically, a previously set fixed value is set as the regeneration current limiting value. In this case, a value smaller than that in the other methods is set as the regeneration current setting value.

After the regeneration current limiting value for the first limit of regeneration power has been set in S5-81, a regeneration control preprocess is performed in S5-82. In the regeneration control preprocess, the amount of regeneration requested from the vehicle controller 600 that is the higher-order control system or the brake controller 710 is received, and any one of the following processes is performed according to the received requested amount of regeneration.

1

1) If the received requested amount of regeneration is equal to or below the regeneration current limiting value used in performing the first limit of regeneration power, the process proceeds to a process in which the regeneration current limiting value or the regeneration power limiting amount for the first limit of regeneration power is transmitted to the vehicle controller 600 that is the higher-order control system or the brake controller 710 and the regeneration control is performed based on the received amount of regeneration.

2) If the received requested amount of regeneration is larger than the regeneration current limiting value used in the first limit of regeneration power, the process proceeds to a process in which the regeneration current limiting value or the regeneration power limiting amount for the first limit of regeneration power is transmitted to the vehicle controller 600 that is the higher-order control system or the brake controller 710 and the regeneration control is performed based on the regeneration current limiting value used in performing the first limit of regeneration power.

In addition, if it is determined in S5-80 that the process is not a first process of the first limit of regeneration power, the process proceeds to S5-82 because the regeneration power limiting amount has already been set, and the first limit of regeneration power is performed there as described above.

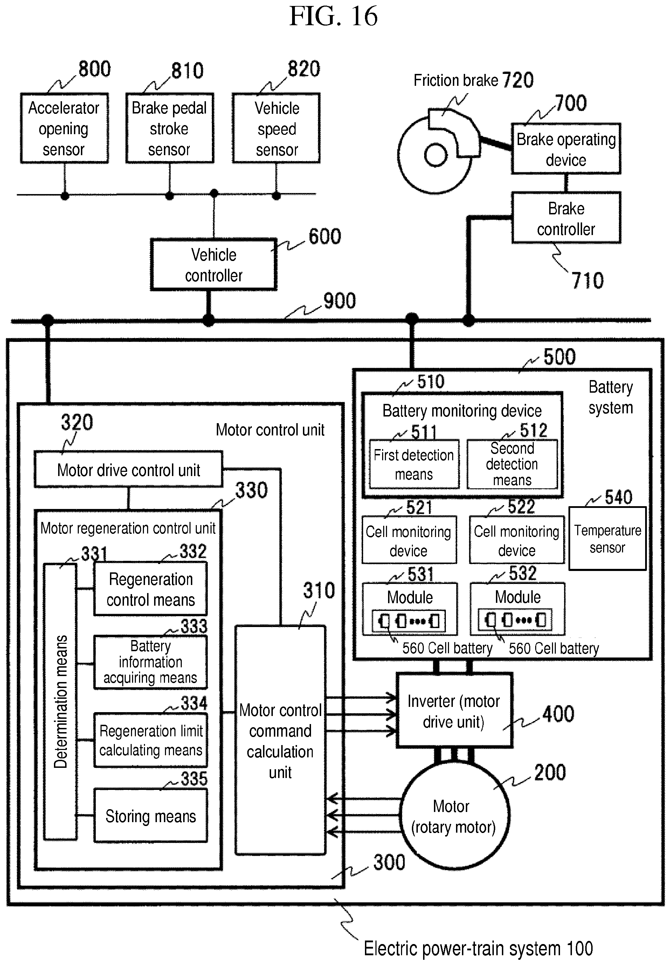

Next, Figure 16 illustrates another example of the electric power-train system 100 to which the regeneration control device of the present invention is applied. Similar to the example illustrated in Figure 1, the electric power-train system 100 illustrated in Figure 16 is constituted by a motor 200 which is a rotary motor, an inverter 400 which is a motor drive unit, a motor control unit 300 which outputs a control command for the inverter, and a battery system 500 which supplies power to the inverter 400, and the same operations as those in the example illustrated in Figure 1 are performed in the system.

Compared with the example illustrated in Figure 1, the example illustrated in Figure 16 has a different configuration of the battery monitoring device 510 that detects internal statuses of the battery system 500 and outputs the information about the battery system 500 via the control area network 900 and the like. The battery monitoring device 510 in the example illustrated in Figure 16 is provided with a plurality of detection means such as first detection means 511 and second detection means 512.

The battery system 500 includes a plurality of cell batteries 560, and the cell batteries 560 are managed not individually and are usually managed by handling a certain number of cell batteries 560 as one module. For example, four cell batteries 560 constitute one module 531, 532. In this case, for one module 531, 532, one cell monitoring device 521, 522 respectively monitors the four cell batteries 560 included in each module. For example, voltages across terminals of the four cell batteries 560 are detected by one cell monitoring device 521, 522. The cell monitoring device 521, 522 is connected to the battery monitoring device 510 via a communication system not illustrated in Figure 16, and the cell monitoring device 521, 522 detects the states of the cell batteries 560 constituting the module 531, 532 and results of the detection are transmitted to the battery monitoring device 510 via the communication system. As described above, the states of the cell batteries 560 constituting the battery system 500 are collected into the battery monitoring device 510, various processes are performed by the battery monitoring device 510, and the state of the battery system 500 and the states of the cell batteries 560 are transmitted to other controllers via the control area network 900.

The cell monitoring device 521, 522 is usually constituted by a plurality of cell monitoring devices that is connected with the battery monitoring device 510 by daisy chain connection, and results detected by the cell monitoring device 521 are transmitted to a subsequent cell monitoring device 522 and are then transmitted from the cell monitoring device 522 to a further subsequent cell monitoring device, for example. All the states of the cell batteries 560 detected by the cell monitoring devices are transmitted to the battery monitoring device 510 via the plurality of cell monitoring devices as described above. Accordingly, it takes time until all the states of all the cell batteries 560 are transmitted to the battery monitoring device 510. The method for transmitting the states of all the cell batteries 560 via the communication system described above is implemented by the first detection means 511 in the example illustrated in Figure 16.

Meanwhile, in a case where the state of the battery system 500 is detected while performing the first limit of regeneration power after the braking request to set the limit of regeneration power for the second limit of regeneration power, it is preferable to immediately detect the states of the cell batteries 560 constituting the battery system 500. If the detection is performed immediately, the period of the first limit of regeneration power can be shortened, and thus as the period becomes shorter, the regeneration can be performed more times. Accordingly, in the example illustrated in Figure 16, the second detection means 512 is provided, which is different from the first detection means 511 used in a usual battery monitoring device 510, and in detecting the state of the battery system 500 while performing the first limit of regeneration power after the braking request, the second detection means 512 is used, which allows the detection to be more immediately performed compared with the example using the first detection means 511.

To describe an example of the second detection means 512, differently from the example using the first detection means 511 in which the states of all the cell batteries 560 constituting the modules 531, 531 detected by the cell monitoring devices 521, 522 are transmitted, the second detection means 512 includes a method in which each of the cell monitoring devices 521, 522 transmits the state of a cell battery 560 with the highest voltage across terminals among the plurality of cell batteries 560 being monitored only. In other words, for each of the modules 531, 532, information about the cell battery 560 likely to reach the regeneration inhibiting voltage during the regeneration only is transmitted. Thus, the amount of data to be transmitted can be reduced, and information about a worst cell battery included in the modules can be transmitted to the battery monitoring device 510 in a period shorter than that for the first detection means 511. Accordingly, an effect can be achieved such that the process can proceed to the second limit of regeneration power at a timing earlier than the case in which the detection depends on the first detection means 511.

Another example of the second detection means 512 includes a method in which, for example, one cell monitoring device 521 transmits the state of a cell battery 560 with the highest voltage across terminals among the plurality of cell batteries included in the module 531 being monitored only to a subsequent cell monitoring device 522, and the cell monitoring device 522 compares , among the plurality of cell batteries included in the module 532 being monitored, the voltage across terminals of the cell battery 560 having the highest voltage across terminals with the highest voltage across terminals among those detected from the module 531 that have been transmitted from the cell monitoring device 521 and transmits the information about the cell battery with the higher voltage across terminals to a subsequent cell monitoring device. As described above, the cell monitoring devices serially transmits the information about the cell battery with the highest voltage across terminals only instead of transmitting all information, and thereby the amount of data to be transmitted can be reduced and the information about the worst cell battery of the modules can be transmitted to the battery monitoring device 510 in a period shorter than that for the first detection means 511.

Further, a different another example of the second detection means 512 includes a method in which, for example, the cell monitoring devices 521, 522 transmit the state of the cell battery 560 with the highest voltage across terminals only, among the plurality of cell batteries of the module 531 being monitored, directly to the battery monitoring device 510. The cell monitoring devices 521, 522 transmit minimum data only, such as a detection value of voltage of the cell battery 560 with the highest voltage across terminals among the modules, directly to the battery monitoring device 510, and thereby the amount of data to be transmitted can be reduced and the information about the worst cell battery of the modules can be transmitted in a period shorter than that for the first detection means 511.

The second detection means 512 is not limited to the above-described example, and any configuration or any method may be employed in which the battery monitoring device 510 is enabled to immediately collect information such as the voltage across terminals of the cell battery 560 with the highest voltage across terminals among the modules 531, 532.

As described above, in the example illustrated in Figure 16, the battery monitoring device 510 that monitors the states of the cell batteries 560 constituting the battery system 500 usually monitors the states of all the cell batteries 560 by using the first detection means 511, and during the period of the first limit of regeneration power, in which the limit of regeneration power is performed to collect the state of a cell battery 560 that would possibly reach the regeneration inhibiting voltage during the regeneration by identifying the cell battery 560, the second detection means 512 which is different from the first detection means 511 detects specific information about the cell battery 560 such as a cell battery 560 with the highest voltage across terminals during regeneration and information about a specific cell battery 560 only. Thus, the information about the worst cell battery among the modules can be transmitted to the battery monitoring device 510 in a period shorter than that for the first detection means 511. Accordingly, an effect can be achieved such that the process can proceed to the second limit of regeneration power at a timing earlier than the case in which the detection depends on the first detection means 511.

Specifically, in the example illustrated in Figure 16, the data and information acquired by the battery monitoring device 510 with respect to the cell batteries 560 constituting the battery system 500 are different between the period in which the first limit of regeneration power is being performed and the other periods. In addition, the period of acquiring the data and information acquired by the battery monitoring device 510 with respect to the cell batteries 560 constituting the battery system 500 is different between the period in which the first limit of regeneration power is being performed and the other periods.

As described above, at least two different detection means (the first detection means 511, the second detection means 512) are provided, and thus if it is desired to detect the state of the battery system 500 in a short period such as the period of the first limit of regeneration power, the battery monitoring device 510 can transmit to the control area network specific information about the battery system 500 (e.g., information such as the voltage across terminals, state of charge, the current value of the cell battery 560 with the highest voltage across terminals among the cell batteries 560 constituting the battery system 500) only, by using the second detection means 512 that performs detection in a short period. Accordingly, because the worst cell battery 560 likely to reach the regeneration inhibiting voltage in the first limit of regeneration power can be immediately identified and thus the upper limit value of regeneration current or the upper limit regeneration amount for regeneration with which the worst cell battery 560 would not reach the charge inhibiting voltage can be immediately set, the period of the first limit of regeneration power can be shortened, and thereby a large amount of regeneration can be achieved.

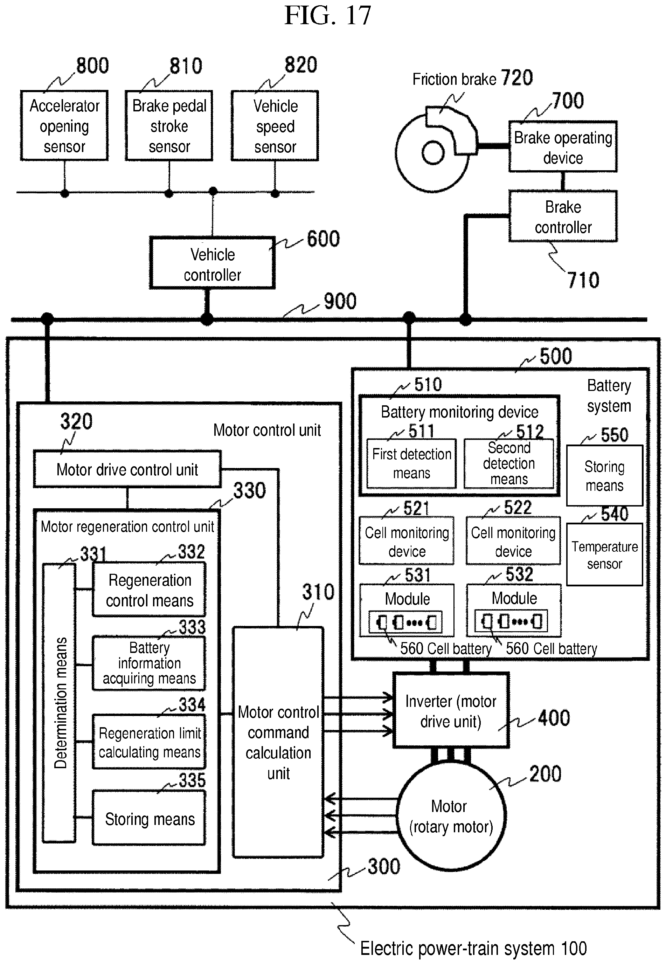

Figure 17 illustrates another example of the electric power-train system 100 of the present invention. Similar to the examples illustrated in Figures 1 and 16, the electric power-train system 100 illustrated in Figure 17 is constituted by a motor 200 which is a rotary motor, an inverter 400 which is a motor drive unit, a motor control unit 300 which outputs a control command for the inverter, and a battery system 500 which supplies power to the inverter 400, and the same operations as those in the examples illustrated in Figures 1 and 16 are performed in the system.

In the example illustrated in Figure 17, in addition to the configurations of the example illustrated in Figure 16, storage means 550 is provided in the battery system 500. As described above with reference to Figure 16, the battery system 500 includes a plurality of cell batteries 560, and the cell batteries 560 are managed not individually and are usually managed by handling a certain number of cell batteries 560 as one module. For example, four cell batteries 560 constitute one module 531, 532. In this case, for one module 531, 532, one cell monitoring device 521, 522 respectively monitors the four cell batteries 560 included in each module. For example, voltages across terminals of the four cell batteries 560 are detected by one cell monitoring device 521, 522. The cell monitoring device 521, 522 is connected to the battery monitoring device 510 via a communication system not illustrated in Figure 17, and the cell monitoring device 521, 522 detects the states of the cell batteries 560 constituting the module 531, 532 and results of the detection are transmitted to the battery monitoring device 510 via the communication system. As described above, the states of the cell batteries 560 constituting the battery system 500 are collected into the battery monitoring device 510, various processes are performed by the battery monitoring device 510, and the state of the battery system 500 and the states of the cell batteries 560 are transmitted to other controllers via the control area network 900.

The cell monitoring device 521, 522 is usually constituted by a plurality of cell monitoring devices that is connected with the battery monitoring device 510 by daisy chain connection, and results detected by the cell monitoring device 521 are transmitted to a subsequent cell monitoring device 522 and are then transmitted from the cell monitoring device 522 to a further subsequent cell monitoring device, for example. All the states of the cell batteries 560 detected by the cell monitoring devices are transmitted to the battery monitoring device 510 via the plurality of cell monitoring devices as described above. Accordingly, it takes time until all the states of all the cell batteries 560 are transmitted to the battery monitoring device 510. In the example illustrated in Figure 17 also, the method for transmitting the states of all the cell batteries 560 via the communication system described above is implemented by the first detection means 511.

As described above, the state of the battery system 500 and the states of the cell batteries 560 constituting the battery system 500 are detected by the battery monitoring device 510 in a predetermined period. Accordingly, even before the first limit of regeneration power of the present invention is performed, the state of the battery system 500 and the states of the cell battery 560 at a timing earlier by predetermined length of time can be generally determined. Or rather, which cell battery of which module (531, 532, ...) has been the worst cell battery that would have reached the charge inhibiting voltage in the first limit of regeneration power and the second limit of regeneration power performed before can be recognized. In this example, candidates of the degraded cell battery that is likely to reach the regeneration inhibiting voltage or candidates of a module including the worst cell battery likely to reach the regeneration inhibiting voltage from among the cell batteries 560 constituting the battery system 500 can be extracted based on the states of the modules 531, 532 of the battery system 500 being continuously monitored by the first detection means 511 and the states of the cell batteries 560 constituting the same in the state in which the first limit of regeneration power is not currently performed.

Specifically, a method can be employed in which the voltages across terminals and the current values or the voltage between modules and the current of the cell batteries that are being continuously monitored for detection are acquired and cell batteries 560 or modules with a low voltage across terminals at the timing of driving are determined as candidates of the worst cell battery likely to reach the regeneration inhibiting voltage during regeneration or the module including the worst cell battery likely to reach the regeneration inhibiting voltage. In addition, another method can be employed in which a cell battery 560 or a module with the largest difference of voltages across terminals between the voltage across terminals at the time of driving and that at the time of the regeneration is determined as a candidate of the worst cell battery likely to reach the regeneration inhibiting voltage or the module including the worst cell battery likely to reach the regeneration inhibiting voltage.

In the example illustrated in Figure 17, after the candidates of the worst cell battery likely to reach the regeneration inhibiting voltage or the candidates of the module including the worst cell battery likely to reach the regeneration inhibiting voltage have been determined based on the information about the cell batteries 560 acquired by using the first detection means 511, results thereof is stored in the storage means 550. As described above, the storage means 550 stores information about which of the cell batteries 560 or modules have been determined to be the candidates of the worst cell battery likely to reach the regeneration inhibiting voltage or the modules including such worst cell battery among the cell batteries 560 or the modules constituting the battery system 500. In acquiring the state of the battery system 500 in the first limit of regeneration power during regeneration, the information about the cell batteries 560 having been determined as the candidates of the worst cell battery likely to reach the regeneration inhibiting voltage or the modules determined to include such worst cell battery, which has been stored in the storage means 550, is read, and the second detection means 512 preferentially detects the states of the specific modules (531, 532, ...) or the cell batteries 560 stored as the candidates only.

As described above, candidates of the cell batteries 560 or modules (531, 532, ...) likely to reach the regeneration inhibiting voltage among the cell batteries 560 or modules constituting the battery system 500 are identified according to previously acquired information and stored in the storage means 550, the second detection means 512 preferentially detects the states of the candidate cell batteries 560 and the candidate modules stored in the storage means 550 only, and thereby the worst cell battery likely to reach the regeneration inhibiting voltage can be immediately identified within short time and in a short period and the upper limit value of regeneration current or the upper limit regeneration amount for regeneration with which the worst cell battery would not reach the charge inhibiting voltage can be immediately set. Accordingly, the period of the first limit of regeneration power can be shortened and a large amount of regeneration can be achieved.

[Reference Signs List]

100 Electric power-train system
200 Motor
300 Motor control unit
310 Motor control command calculation unit
320 Motor drive control unit
330 Motor regeneration control unit
500 Battery system
510 Battery monitoring device
540 Temperature sensor
521, 522 Cell monitoring device
531, 532 Module
560 Cell battery
600 Vehicle controller
700 Brake operating device
710 Brake controller
800 Accelerator opening sensor
810 Brake pedal stroke sensor
820 Vehicle speed sensor
900 Control area network

**Claims**

1. A regeneration control device for a vehicle comprising:

a motor (200) capable of generating a vehicle braking force by regeneration;
a battery system including a plurality of chargeable/dischargeable cell batteries (560);
a battery monitoring device (510) configured to detect a state of the battery system (500) and states of the cell batteries (560) the states of the cell batteries (560) including the voltages across terminals of the voltage of the cell batteries (560) being determined from the open circuit voltage of the cell batteries (560), the output current, and the voltage drop depending on the internal resistance of the cell batteries (560);
a control unit (330) of the regeneration control;
acquiring means (333) configured to acquire battery information and transmit an acquisition request to the battery monitoring device (510) and
regeneration limiting means configured to limit an amount of regeneration by the motor (200) when a vehicle braking request is received within a predetermined regeneration power limiting amount,
wherein a period of a first limit of regeneration power starting when the vehicle braking request is received is provided, in which limit of regeneration power is performed by using a constant value or a regeneration power limiting amount set according to a last state of the battery system (500),
wherein the control unit (330) of the regeneration control device is configured to determine the last state of the battery system (500) based on information about the battery system, previously acquired by the acquiring means (333) receive battery information transmitted from the battery monitoring device (510), and store the received battery information in storing means (335),
**characterized in that**
a period of a second limit of regeneration power in which limit of regeneration power is performed after the period of the first limit of regeneration power following the same braking request is provided, the period of the second limit starting at a timing at which the determination of the states of the cell batteries (560) is completed, and wherein in the period of the second limit, the regeneration power limiting amount is determined according to the states of the cell batteries (560) acquired from the battery monitoring device (510) during the regeneration performed in the period of the first limit of regeneration power, and wherein a cell battery that is likely to reach a predetermined regeneration inhibiting voltage during regeneration is identified according to the states of the cell batteries (560) as the cell battery with the highest voltage across terminals among the multiple cell batteries (560) constituting the battery system (500), during the period of the first limit of regeneration power
and the regeneration power limiting amount for the period of the second limit of regeneration power is determined so that the identified cell battery may not reach the regeneration inhibiting voltage.

2. The regeneration control device for a vehicle according to Claim 1, wherein shifting of period from the period of the first limit of regeneration power to the period of the second limit of regeneration power is performed when the states of all the cell batteries (560) in the battery system (500) have been completely acquired.

3. The regeneration control device for a vehicle according to any one of Claims 1 or 2, wherein the states of the cell batteries (560) acquired during the period of the first limit of regeneration power includes the voltage across terminals, and at least one of a current value, a state of charge (SOC), a state of health (SOH), and an internal resistance value of each of the cell batteries (560).

4. The regeneration control device for a vehicle according to any one of Claims 1 to 3, wherein the regeneration power limiting amount for the period of the first limit of regeneration power is set so that a total voltage of the battery system (500) becomes lower than a predetermined total voltage limiting value.

5. The regeneration control device for a vehicle according to Claim 4, wherein the total voltage limiting value is set according to at least one of a temperature, a state of charge (SOC), a state of health (SOH), and an internal resistance value of the battery system (500) at a timing of receipt of the braking request.

6. The regeneration control device for a vehicle according to any one of Claims 1 to 5, wherein in response to a received vehicle braking request, whether to perform the limit of regeneration power is determined according to at least one of the temperature, the state of charge (SOC), the state of health (SOH), and the internal resistance value of the battery system (500) at a timing of receipt of the braking request.

7. The regeneration control device for a vehicle according to any one of Claims 1 to 6, further comprising:

    storing means configured to store a state of the battery system (500) at a timing of receipt of a braking request during regeneration control having been performed before and involving the period of the second limit of regeneration power and the regeneration power limiting amount for the period of the second limit of regeneration power corresponding thereto,
    wherein if the state of the battery system (500) at the timing of receipt of the braking request is similar to the state having been stored before in the storing means, the limit of regeneration power is performed by using the regeneration power limiting amount in the storing means with the period of the first limit of regeneration power being omitted.

8. The regeneration control device for a vehicle according to any one of Claims 1 to 7, wherein an amount of regeneration smaller than the regeneration power limiting amount for the period of the second limit of regeneration power is set as the regeneration power limiting amount for the period of the first limit of regeneration power.

9. The regeneration control device for a vehicle according to any one of Claims 1 to 8, wherein the battery monitoring device (510) includes:

    first detection means configured to output information about states of all the cell batteries (560); and
    second detection means configured to output information about a state of a cell battery with a highest voltage across terminals among the plurality of cell batteries (560) only, and

    wherein the detection means is switched to the second detection means during the period of the first limit of regeneration power.

10. The regeneration control device for a vehicle according to Claim 9, wherein a period in which the second detection means outputs the information about the state of the cell battery with the highest voltage across terminals is shorter than a period in which the first detection means outputs the information about the states of all the cell batteries (560).

11. The regeneration control device for a vehicle according to claim 1, wherein the regeneration control device further comprises constraint cell battery identifying means configured to identify one or a plurality of cell batteries (560) likely to reach a regeneration inhibiting voltage during regeneration according to states of the cell batteries (560) having been acquired from the battery monitoring device during the regeneration by the regeneration limiting means.

12. The regeneration control device for a vehicle according to Claim 1, wherein after having maintained a regeneration current at a constant first current value for a predetermined period, the regeneration current is maintained at a different second current value for a predetermined period.

**Patentansprüche**

1. Regenerationssteuervorrichtung für ein Fahrzeug, die Folgendes umfasst:

   einen Motor (200), der eine Fahrzeugbremskraft durch Regeneration erzeugen kann;
   ein Batteriesystem, das mehrere ladbare/entladbare Zellenbatterien (560) enthält;
   eine Batterieüberwachungsvorrichtung (510), die konfiguriert ist, einen Zustand des Batteriesystems (500) und Zustände der Zellenbatterien (560) zu detektieren, wobei die Zustände der Zellenbatterien (560), die die Spannungen über Anschlüssen der Spannung der Zellenbatterien (560) enthalten, aus der Leerlaufspannung der Zellenbatterien (560), dem Ausgangsstrom und dem Spannungsabfall abhängig vom Innenwiderstand der Zellenbatterien (560) bestimmt werden;
   eine Steuereinheit (330) der Regenerationssteuerung;
   ein Erfassungsmittel (333), das konfiguriert ist, Batterieinformationen zu erfassen und eine Erfassungsanforderung zur Batterieüberwachungsvorrichtung (510) zu übertragen, und
   ein Regenerationsbeschränkungsmittel, das konfiguriert ist, eine Menge einer Regeneration durch den Motor (200), wenn eine Fahrzeugbremsanforderung empfangen wird, innerhalb eines vorgegebenen Regenerationsleistungsbeschränkungsbetrags zu beschränken, wobei
   ein Zeitraum einer ersten Beschränkung der Regenerationsleistung, der startet, wenn die Fahrzeugbremsanforderung empfangen wird, vorgesehen ist, in dem eine Beschränkung der Regenerationsleistung unter Verwendung eines konstanten Werts oder eines Regenerationsleistungsbeschränkungsbetrags, der gemäß einem letzten Zustand des Batteriesystems (500) eingestellt ist, durchgeführt wird, und
   die Steuereinheit (330) der Regenerationssteuervorrichtung konfiguriert ist, den letzten Zustand des Batteriesystems (500) auf der Grundlage von Informationen über das Batteriesystem, die zuvor durch das Erfassungsmittel (333) erfasst wurden, zu bestimmen, Batterieinformationen, die von der Batterieüberwachungsvorrichtung (510) gesendet wurden, zu empfangen und die empfangenen Batterieinformationen in einem Speichermittel (335) zu speichern,
   **dadurch gekennzeichnet, dass**
   ein Zeitraum einer zweiten Beschränkung der Regenerationsleistung, in dem eine Beschränkung der Regenerationsleistung durchgeführt wird, nach dem Zeitraum der ersten Beschränkung der Regenerationsleistung auf dieselbe Bremsanforderung folgend vorgesehen ist, wobei der Zeitraum der zweiten Beschränkung zu einem Zeitpunkt startet, zu dem die Bestimmung der Zustände der Zellenbatterien (560) abgeschlossen ist, wobei der Regenerationsleistungsbeschränkungsbetrag im Zeitraum der zweiten Beschränkung gemäß den Zuständen der Zellenbatterien (560), die von der Batterieüberwachungsvorrichtung (510) während der Regeneration, die im Zeitraum der ersten Beschränkung der Regenerationsleistung durchgeführt wird, erfasst werden, bestimmt wird und eine Zellenbatterie, die während einer Regeneration wahrscheinlich eine vorgegebene Regenerationshemmspannung erreicht, gemäß den Zuständen der Zellenbatterien (560) als die Zellenbatterie mit der höchsten Spannung über Anschlüssen unter den mehreren Zellenbatterien (560), die das Batteriesystem (500) bilden, während des Zeitraums der ersten Beschränkung der Regenerationsleistung identifiziert wird, und der Regenerationsleistungsbeschränkungsbetrag für den Zeitraum der zweiten Beschränkung der Regenerationsleistung derart bestimmt wird, dass die identifizierte Zellenbatterie die Regenerationshemmspannung nicht erreichen darf.

2. Regenerationssteuervorrichtung für ein Fahrzeug nach Anspruch 1, wobei ein Wechseln des Zeitraums vom Zeitraum der ersten Beschränkung der Regenerationsleistung zum Zeitraum der zweiten Beschränkung der Regenerationsleistung durchgeführt wird, wenn die Zustände aller Zellenbatterien (560) im Batteriesystem (500) vollständig erfasst worden sind.

3. Regenerationssteuervorrichtung für ein Fahrzeug nach einem der Ansprüche 1 oder 2, wobei die Zustände der Zellenbatterien (560), die während des Zeitraums der ersten Beschränkung der Regenerationsleistung erfasst werden, die Spannung über Anschlüssen und einen Stromwert und/oder einen Ladezustand (SOC) und/oder einen Funktionszustand (SOH) und/oder einen internen Widerstandswert jeder Zellenbatterie (560) enthalten.

4. Regenerationssteuervorrichtung für ein Fahrzeug nach einem der Ansprüche 1 bis 3, wobei der Regenerationsleistungsbeschränkungsbetrag für den Zeitraum der ersten Beschränkung der Regenerationsleistung derart eingestellt ist, dass eine Gesamtspannung des Batteriesystems (500) kleiner als ein vorgegebener Gesamtspannungsgrenzwert ist.

5. Regenerationssteuervorrichtung für ein Fahrzeug nach Anspruch 4, wobei der Gesamtspannungsgrenzwert gemäß einer Temperatur und/oder einem Ladezustand (SOC) und/oder einem Funktionszustand (SOH) und/oder einem Innenwiderstandswert des Batteriesystems (500) zu einem Zeitpunkt des Eingangs der Bremsanforderung eingestellt ist.

6. Regenerationssteuervorrichtung für ein Fahrzeug nach einem der Ansprüche 1 bis 5, wobei in Reaktion auf eine empfangene Fahrzeugbremsanforderung gemäß der Temperatur und/oder dem Ladezustand (SOC) und/oder dem Funktionszustand (SOH) und/oder dem Innenwiderstandswert des Batteriesystems (500) zu einem Zeitpunkt des Eingangs der Bremsanforderung bestimmt wird, ob die Beschränkung der Regenerationsleistung durchgeführt werden soll.

7. Regenerationssteuervorrichtung für ein Fahrzeug nach einem der Ansprüche 1 bis 6, die ferner Folgendes umfasst:

ein Speichermittel, das konfiguriert ist, einen Zustand des Batteriesystems (500) zu einem Zeitpunkt des Eingangs einer Bremsanforderung während einer Regenerationssteuerung, die zuvor durchgeführt wurde, und den Zeitraum der zweiten Beschränkung der Regenerationsleistung und den Regenerationsleistungsbeschränkungsbetrag für den Zeitraum der zweiten Beschränkung der Regenerationsleistung, der ihm entspricht, zu speichern, wobei
dann, wenn der Zustand des Batteriesystems (500) zum Zeitpunkt des Eingangs der Bremsanforderung ähnlich dem Zustand, der zuvor im Speichermittel gespeichert wurde, ist, die Beschränkung der Regenerationsleistung unter Verwendung des Regenerationsleistungsbeschränkungsbetrags im Speichermittel durchgeführt wird, wobei der Zeitraum der ersten Beschränkung der Regenerationsleistung ausgelassen wird.

8. Regenerationssteuervorrichtung für ein Fahrzeug nach einem der Ansprüche 1 bis 7, wobei ein Betrag einer Regeneration, der kleiner als der Regenerationsleistungsbeschränkungsbetrag für den Zeitraum der zweiten Beschränkung der Regenerationsleistung ist, als der Regenerationsleistungsbeschränkungsbetrag für den Zeitraum der ersten Beschränkung der Regenerationsleistung eingestellt ist.

9. Regenerationssteuervorrichtung für ein Fahrzeug nach einem der Ansprüche 1 bis 8, wobei die Batterieüberwachungsvorrichtung (510) Folgendes enthält:

ein erstes Detektionsmittel, das konfiguriert ist, Informationen über Zustände aller Zellenbatterien (560) auszugeben; und
ein zweites Detektionsmittel, das konfiguriert ist, lediglich Informationen über ein Zustand einer Zellenbatterie mit einer höchsten Spannung über Anschlüssen unter den mehreren Zellenbatterien (560) auszugeben, und wobei
das Detektionsmittel während des Zeitraums der ersten Beschränkung der Regenerationsleistung zum zweiten Detektionsmittel geschaltet wird.

10. Regenerationssteuervorrichtung für ein Fahrzeug nach Anspruch 9, wobei ein Zeitraum, in dem das zweite Detektionsmittel die Informationen über der Zustand der Zellenbatterie mit der höchsten Spannung über Anschlüssen ausgibt, kleiner als ein Zeitraum ist, in dem das erste Detektionsmittel die Informationen über die Zustände aller Zellenbatterien (560) ausgibt.

11. Regenerationssteuervorrichtung für ein Fahrzeug nach Anspruch 1, wobei die Regenerationssteuervorrichtung ferner ein Einschränkungszellenbatterieidentifizierungsmittel umfasst, das konfiguriert ist, eine oder mehrere Zellenbatterien (560) zu identifizieren, die während einer Regeneration gemäß Zuständen der Zellenbatterien (560), die während der Regeneration durch das Regenerationsbeschränkungsmittel von der Batterieüberwachungsvorrichtung erfasst wurden, wahrscheinlich eine Regenerationshemmspannung erreichen.

12. Regenerationssteuervorrichtung für ein Fahrzeug nach Anspruch 1, wobei dann, wenn ein Regenerationsstrom für einen vorgegebenen Zeitraum bei einem konstanten ersten Stromwert gehalten worden ist, der Regenerationsstrom für einen vorgegebenen Zeitraum bei einem verschiedenen zweiten Stromwert gehalten wird.

**Revendications**

1. Dispositif de commande de récupération pour un véhicule comprenant :

un moteur (200) capable de générer une force de freinage du véhicule par récupération ;

un système de batteries incluant une pluralité de batteries de cellules chargeables/déchargeables (560) ;

un dispositif de surveillance de batteries (510) configuré pour détecter un état du système de batteries (500) et des états des batteries de cellules (560), les états des batteries de cellules (560) incluant les tensions à travers des bornes de la tension des batteries de cellules (560) qui sont déterminées à partir de la tension en circuit ouvert des batteries de cellules (560), du courant de sortie, et de la chute de tension en dépendance de la résistance interne des batteries de cellules (560) ;

une unité de commande (330) de la commande par récupération ;

un moyen d'acquisition (333) configuré pour acquérir des informations de batteries et pour transmettre une requête d'acquisition au dispositif de surveillance de batteries (510), et

un moyen de limitation de récupération configuré pour limiter une amplitude de récupération via le moteur (200) quand une requête de freinage du véhicule est reçue à l'intérieur d'une amplitude de limitation de puissance de récupération prédéterminée,

dans lequel il est prévu une période d'une première limite de puissance de récupération qui commence quand la requête de freinage du véhicule est reçue, dans laquelle la limite de puissance de récupération est effectuée en utilisant une valeur constante ou une amplitude de limitation de puissance de récupération fixée en accord avec un dernier état du système de batteries (500),

dans lequel l'unité de commande (330) du dispositif de commande de récupération est configuré pour déterminer le dernier état du système de batteries (500) sur la base d'informations concernant le système de batteries, acquises précédemment par le moyen d'acquisition (333), pour recevoir des informations de batteries transmises depuis le dispositif de surveillance de batteries (510), et pour stocker les informations de batteries reçues dans un moyen de stockage (335),

**caractérisé en ce que**

il est prévu une période d'une seconde limite de puissance de récupération dans laquelle une limite de puissance de récupération est effectuée après la période de la première limite de puissance de récupération à la suite de la même requête de freinage, la période de la seconde limite commençant à une temporisation à laquelle la détermination des états des batteries de cellules (560) est achevée, et

dans lequel, dans la période de la seconde limite, l'amplitude de limitation de puissance de récupération est déterminée en accord avec les états des batteries de cellules (560) acquis depuis le dispositif de surveillance de batteries (510) pendant la récupération effectuée dans la période de la première limite de puissance de récupération, et dans lequel une batterie de cellules qui est la plus probable d'atteindre une tension d'inhibition de récupération prédéterminée pendant la récupération est identifiée en accord avec les états des batteries de cellules (560) comme étant la batterie de cellules avec la tension la plus élevée à travers des bornes parmi les multiples batteries de cellules (560) constituant le système de batteries (500), pendant la période de la première limite de puissance de récupération,

et l'amplitude de limitation de puissance de récupération pendant la période de la seconde limite de puissance de récupération est déterminée de sorte que la batterie de cellules identifiée peut ne pas atteindre la tension d'inhibition de récupération.

2. Dispositif de commande de récupération pour un véhicule selon la revendication 1, dans lequel un décalage de période depuis la période de la première limite de récupération de puissance jusqu'à la période de la seconde limite de récupération de puissance est effectué quand les états de la totalité des batteries de cellules (560) dans le système de batteries (500) ont été complètement acquis.

3. Dispositif de commande de récupération pour un véhicule selon l'une quelconque des revendications 1 ou 2, dans lequel les états des batteries de cellules (560) acquis durant la période de la première limite de puissance de récupération incluent la tension à travers des bornes, et au moins un paramètre parmi une valeur de courant, un état de charge (SOC), un état de santé (SOH), et une valeur de résistance interne de chacune des batteries de cellules (560).

4. Dispositif de commande de récupération pour un véhicule selon l'une quelconque des revendications 1 à 3, dans lequel l'amplitude de limitation de puissance de récupération pendant la période de la première limite de puissance de récupération est fixée de sorte qu'une tension totale du système de batteries (500) devient inférieure à une valeur de limitation de tension totale prédéterminée.

5. Dispositif de commande de récupération pour un véhicule selon la revendication 4, dans lequel la valeur de limitation de tension totale est fixée en accord avec au moins un paramètre parmi une température, un état de charge (SOC), un état de santé (SOH), et une valeur de résistance interne du système de batteries (500) à une temporisation de réception de la requête de freinage.

**6.** Dispositif de commande de récupération pour un véhicule selon l'une quelconque des revendications 1 à 5, dans lequel, en réponse à une requête de freinage du véhicule reçue, le fait de savoir s'il faut effectuer la limite de la puissance de récupération est déterminé en accord avec au moins un paramètre parmi la température, l'état de charge (SOC), l'état de santé (SOH), et la valeur de résistance interne du système de batteries (500) à une temporisation de réception de la requête de freinage.

**7.** Dispositif de commande de récupération pour un véhicule selon l'une quelconque des revendications 1 à 6, comprenant en outre :

un moyen de stockage configuré pour stocker un état du système de batteries (500) à une temporisation de réception d'une requête de freinage pendant une commande de récupération qui a été effectuée auparavant et impliquant la période de la seconde limite de puissance de récupération et l'amplitude de limitation de puissance de récupération pour la période de la seconde limite de puissance de récupération correspondant à celle-ci,

dans lequel, si l'état du système de batteries (500) à la temporisation de réception de la requête de freinage est similaire à l'état qui a été stocké auparavant dans le moyen de stockage, la limite de puissance de récupération est effectuée en utilisant l'amplitude de limitation de puissance de récupération dans le moyen de stockage avec une omission de la période de la première limite de puissance de récupération.

**8.** Dispositif de commande de récupération pour un véhicule selon l'une quelconque des revendications 1 à 7, dans lequel une amplitude de récupération plus petite qu'une amplitude de limitation de puissance de récupération pour la période de la seconde limite de puissance de récupération est fixée à titre d'amplitude de limitation de puissance de récupération pour la période de la première limite de puissance de récupération.

**9.** Dispositif de commande de récupération pour un véhicule selon l'une quelconque des revendications 1 à 8, dans lequel le dispositif de surveillance de batteries (510) inclut :

un premier moyen de détection configuré pour sortir des informations concernant des états de la totalité des batteries de cellules (560) ; et
un second moyen de détection configurée pour sortir des informations concernant un état d'une batterie de cellules avec une tension la plus élevée à travers des bornes parmi la pluralité de batteries de cellules (560) uniquement, et
dans lequel le moyen de détection est commuté vers le second moyen de détection pendant la période de la première limite de puissance de récupération.

**10.** Dispositif de commande de récupération pour un véhicule selon la revendication 9, dans lequel une période dans laquelle le second moyen de détection sort les informations concernant l'état de la batterie de cellules avec la tension la plus élevée à travers des bornes est plus courte qu'une période dans laquelle le premier moyen de détection sort les informations concernant les états de la totalité des batteries de cellules (560).

**11.** Dispositif de commande de récupération pour un véhicule selon la revendication 1, dans lequel le dispositif de commande de récupération comprend en outre un moyen d'identification de batterie de cellules de contrainte configuré pour identifier une ou une pluralité de batteries de cellules (560) la ou les plus probables d'atteindre une tension d'inhibition de récupération pendant la récupération en accord avec des états des batteries de cellules (560) qui ont été acquis depuis le dispositif de surveillance de batteries pendant la récupération via le moyen de limitation de récupération.

**12.** Dispositif de commande de récupération pour un véhicule selon la revendication 1, dans lequel, après avoir maintenu un courant de récupération à une première valeur de courant constante pour une période prédéterminée, le courant de récupération est maintenu à une seconde valeur de courant différente pour une période prédéterminée.

# FIG. 1

Electric power-train system 100

# FIG. 2

S1_1 — Start

S1_2 — Braking request received? — No / Yes

S1_3 — Request receiving of cell state

S1_4 — Receive cell state

S1_5 — Determine cell state

S1_6 — Transmit degraded cell information

S1_7 — Return

FIG. 3

S2_1

Start

S2_2

Braking request
received?

No

Yes

S2_5

Determination of
cell state completed?

No

Yes

S2_8

First limit of regeneration
power

S2_9

Second limit of regeneration
power

S2_3

Request receiving
of cell state

S2_4

Receive cell state

S2_7

Return

# FIG. 4

S3_1

Start

S3_2

Braking request received?

No

Yes

S3_10

Read battery information

S3_5

Determination of
cell state completed?

No

Yes

S3_8

First limit of regeneration
power

S3_9

Second limit of regeneration
power

S3_3

Request receiving
of cell state

S3_4

Receive cell state

S3_7

Return

## FIG. 5

S4_1 — Start

S4_2 — Braking request received?  No →

Yes ↓

S4_10 — Read battery information

S4_11 — Limit of regeneration power necessary?  No

Yes ↓

S4_5 — Determination of cell state completed?

No →

Yes ↓

S4_8 — First limit of regeneration power

S4_9 — Second limit of regeneration power

S4_12 — Regeneration control

S4_3 — Request receiving of cell state

S4_4 — Receive cell state

S4_7 — Return

# FIG. 6

S5_1 — Start

S5_2 — Braking request received? — No

Yes

S5_10 — Read battery information

S5_11 — Limit of regeneration power necessary? — No

Yes

S5_13 — Determination of cell state necessary? — No

S5_5 — Determination of cell state completed? — No

Yes

S5_8 — First limit of regeneration power

S5_3 — Request receiving of cell state

S5_4 — Receive cell state

S5_9 — Second limit of regeneration power

S5_12 — Regeneration control

S5_7 — Return

# FIG. 7

(A) Braking force and driving force — Drive, Braking, Start of braking, Braking request, Second limit of regeneration power started, Time t0, Time t1, Time t2, Total braking force, Regeneration braking force, Distribution of regeneration braking and friction braking using regeneration power limiting current, Time

Start of first limit of regeneration power
Amount for second limit of regeneration power is transmitted

(B) Discharge (driving), Battery current (limited inverter current), Charge (regeneration) — Period of first limit of regeneration power, Period of second limit of regeneration power, Calculate second limit of regeneration power, Current of first limit of regeneration power, Current of second limit of regeneration power, Time

Request for acquisition of cell information
Cell information is received

(c) Cell voltage — Limit of overvoltage, Discharge (driving), Charge (regeneration), Time

Cell information is transmitted

# FIG. 8

**(A)**
Braking force and driving force

Drive
Braking is started
Time t0
Time t1
Regeneration braking force in Case 1
Regeneration braking force in Case 2
Total braking force

**(B)**
Battery current

Period of first limit of regeneration power
Period of second limit of regeneration power
Discharge (driving)
Charge (regeneration)
Regeneration current in Case 2
Regeneration current in Case 1
(1) Current of first limit of regeneration power
Current value in second limit of regeneration power in Case 1
Current value in second limit of regeneration power in Case 2

**(C-1)** Case1
Cell voltage
Limit of overvoltage
Charge (regeneration)
Discharge (driving)
Cell voltage of degraded cell is low

**(C-2)** Case2
Cell voltage
Limit of overvoltage
Charge (regeneration)
Discharge (driving)
Cell voltage of degraded cell is high

# FIG. 9

From S5-1

S5-2

Receive accelerator opening sensor signal    S5-21

Receive brake pedal stroke sensor signal    S5-22

Receive vehicle speed sensor signal    S5-23

S5-24

Determination of braking request
- Accelerator off
  : Braking equivalent to braking by engine brake requested
- Accelerator on
  : Braking according to pedalling force requested
→ Determine whether braking by driver has been requested

Yes

No

To S5-11

To S5-7

# FIG. 10

Accelerator opening sensor signal →
Vehicle speed sensor signal →

**611**

| First requested braking force calculation means |

→ First requested braking force

Brake pedal stroke sensor signal →

**612**

| Second requested braking force calculation means |

→ Second requested braking force

First requested braking force →
Second requested braking force →

**613**

| Third requested braking force calculation means |

→ Requested braking force

# FIG. 11

From S5-2

↓

**S5_10**

Battery information reading process

Following information that has been acquired from battery monitoring device 510 and stored in storing means 335 is read
  1) Battery temperature signal
  2) Battery SOC signal
  3) Battery internal resistance
  4) Total battery voltage
  5) State of health (SOH) of battery

↓

To S5-11

# FIG. 12

From S5-10

S5_11

Process for determining whether limit of
regeneration power is necessary

1) Battery temperature
2) Battery SOC
3) Battery internal resistance
4) Total battery voltage
5) State of health of battery is equal to or above
   predetermined value

If at least one of the above conditions is satisfied
→ Limit of regeneration power is necessary
In other cases → Limit of regeneration power is not
necessary

Necessary

Not necessary

To S5-13

To S5-12

# FIG. 13

From S5-3

S5-4

Cell state receiving process

If cell state receiving request has been
received, average current value and average
cell voltage values are received from battery
monitoring device and stored in storage device.

To S5-7

# FIG. 14

From S5-4

S5-5

Cell state determination completion process

- Average of current values acquired by a plurality of times of sampling and average cell voltage values are received and data stored in storage device is read.
- Degraded cell is identified according to a plurality of average current values and average cell voltage values.

- Calculation of regeneration current limiting value in second limit of regeneration power
  Upper limit current at which degraded cell would not reach regeneration inhibiting voltage is calculated.
  Based on calculated upper limit current, regeneration power limiting amount is transmitted to higher-order control system (cooperation control between regeneration brake and friction brake)

- If identification of degraded cell and acquisition of data have been completed, cell state determination is completed.

No

Yes

To S5-8

To S5-9

# FIG. 15

From S5-5

S5-8

First
process of first limit of regeneration
power after braking request is
received?

S5-80

No

Yes

S5-81

Process for calculating regeneration current limiting value
in first limit of regeneration power

Regeneration current limiting value is set according to battery
history information acquired in S5-10 by any of the following
1) By setting the value according to battery temperature
2) By setting the value according to battery SOC
3) By setting the value according to battery internal resistance
4) Predetermined value is set

Preprocess for regeneration control
Amount of regeneration is received from higher-order control
system (cooperation control between regeneration brake and
friction brake)

⇒ If received amount of regeneration is equal to or smaller than
regeneration current limiting value in first limit of regeneration
power
Regeneration power limiting amount is transmitted to higher-
order control system and regeneration control is performed by
using received amount of regeneration

⇒ If received amount of regeneration is larger than regeneration
current limiting value in first limit of regeneration power
Regeneration power limiting amount is transmitted to higher-
order control system and regeneration control is performed
according to regeneration current limiting value in first limit of
regeneration power

S5-82

To S5-3

# FIG. 16

Electric power-train system 100

# FIG. 17

800
Accelerator opening sensor

810
Brake pedal stroke sensor

820
Vehicle speed sensor

Friction brake 720

700
Brake operating device

600
Vehicle controller

Brake controller
710

900

500
Battery system

510
Battery monitoring device

511
First detection means

512
Second detection means

550
Storing means

320
Motor drive control unit

Motor control unit

330
Motor regeneration control unit

331
Determination means

332
Regeneration control means

333
Battery information acquiring means

334
Regeneration limit calculating means

335
Storing means

310

Motor control command calculation unit

521
Cell monitoring device

522
Cell monitoring device

540
Temperature sensor

531
Module

532
Module

560 Cell battery   560 Cell battery

Inverter (motor drive unit)
400

200
Motor (rotary motor)

300

Electric power-train system 100

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004173424 A, Kokai
- JP 2010226792 A
- JP 2010200557 A
- WO 2012053592 A
- EP 2019468 A1